# EUROPEAN PATENT APPLICATION

(11) **EP 4 445 808 A1**
(43) Date of publication of application: **16.10.2024**
(21) Application number: 21967334.0
(22) Date of filing: 09.12.2021
(51) Int. Cl.: A47J 31/06, A47J 31/42, A47J 31/44

(54) **COFFEE MAKER**

(30) Priority: 07.12.2021 KR 20210173348
(71) Applicant: LG Electronics Inc., Yeongdeungpo-gu Seoul 07336 (KR)
(72) Inventor: YANG, Jungkeun, Seoul 08592 (KR); NAM, Hyeunsik, Seoul 08592 (KR); CHOI, Seung-Yeon, Seoul 08592 (KR)
(74) Representative: Vossius & Partner Patentanwälte Rechtsanwälte mbB
(86) International application number: PCT/KR2021/018672
(87) International publication number: WO 2023/106461

(57) **Abstract**

Disclosed is an invention relating to a coffee maker. A coffee maker, according to the present invention, comprises: a dripper, which receives water and ground coffee via the open upper side thereof, and extracts coffee from the ground coffee and discharges same downward; and a water outlet module which is located above the dripper and supplies water to the inside of the dripper, wherein the water outlet module comprises: a first supply pipe which is made of metal and has a first inner pipe guiding the movement of water; a second supply pipe which is rotatably connected to the first supply pipe, communicates with the first inner pipe, and has a second inner pipe guiding the movement of water; and a water outlet arm to which the second supply pipe is rotatably connected.

## Description

### [Technical Field]

The present invention relates to a coffee maker, and more specifically, to a coffee maker that supplies water to ground coffee powder through a supply pipe in which a plurality of pipes are rotatably connected.

### [Background Art]

A coffee maker is an apparatus that brews coffee, and an apparatus that automatically brews coffee beans when coffee and water are supplied.

Generally, a coffee maker includes a container that receives ground coffee and a dispenser that supplies water to the inside of the container. Conventional dispensers supply water only to a portion of the coffee received inside the container. Thus, because the contact area between ground coffee and water is small, high-quality coffee cannot be produced.

Conventional art 1 (Republic of Korea Patent Registered Publication No. 10-1913340, titled with an apparatus for manufacturing drip coffee) includes a boiler module that stores water and heats the water to a set temperature, a nozzle that receives hot water from the boiler module and discharges the hot water, an electric device that rotates the nozzle and implements a drip pattern, a dripper that fills a filter with ground coffee and pours the hot water to extract the coffee, and a server that receives the filtered coffee from the dripper.

The nozzle in conventional art 1 is fixed to the main frame located on the upper side of the dripper, and the main frame moves in a linear direction by the operation of a second motor.

In conventional art 1, the main frame connected to the nozzle functions as a pipe supplying water, but because it has a single pipe structure, the nozzle moves only in a linear direction.

Therefore, the nozzle and main frame in conventional art 1 cannot move in a spiral trajectory, and a separate motor structure to rotate the dripper is required. As a result, the product size of the coffee maker according to conventional art 1 increases, and there is a problem with the production cost increasing due to the relatively complex configuration.

Also, the hot water supply tube in conventional art 1 is a soft tube that is easy to bend. Therefore, the durability of the hot water supply tube is reduced due to the high temperature water supplied through the hot water supply tube, resulting in an increase in maintenance costs. In addition, there is a problem in that water leakage occurs due to cracks occurring in hot water supply tubes with reduced durability, which increases the possibility of electric leakage.

In addition, the hot water supply tube in conventional art 1 is made of a soft material such as rubber, and has a problem in that the hot water supply tube hardens or ages due to continuous use of the tube and releases contaminants, including environmental hormones.

In addition, the nozzle and hot water supply tube in conventional art 1 are made of separate members, and the nozzle is coupled to the hot water supply tube to supply high temperature water. Therefore, when the hot water supply tube connected to the nozzle expands due to high temperature water, there is a problem that water leakage occurs between the nozzle and the hot water supply tube.

In addition, the hot water supply tube in conventional art 1 is easily bent and does not have a separate structure to support the load of the tube, so there is a problem in that the load of the tube is transferred to the nozzle and the fatigue load of the nozzle is accumulated.

In addition, since the hot water supply tube in conventional art 1 is easily bent, there is a high possibility that the hot water supply tube will be twisted as it moves along with the nozzle, which causes the problem of water supply being interrupted.

Conventional art 2 (Republic of Korea Patent Application Publication No. 10-2016-0128205, title with an automatic drip coffee maker) includes a body case assembled with injection molded products to form an exterior, a rapid heating assembly including a rapid heating heater and water tank included inside the body case, a tank nozzle assembly including a nozzle, and a stand on which the coffee dripper and coffee server are mounted and assembled to the body case.

In conventional art 2, the drip nozzle discharging water is connected to the drip nozzle pipe, and a rack gear or the like is installed on the drip nozzle pipe to move the drip nozzle in a linear direction together with the drip nozzle pipe.

Since the drip nozzle pipe in conventional art 2 is made of a rigid body and has a single pipe structure like the main frame in conventional art 1, the drip nozzle cannot move in a spiral trajectory. Therefore, in conventional art 2, a separate rotary motor that rotates the coffee dripper is installed on the lower side of the coffee server, so the external appearance of the product increases, and the production cost increases due to the relatively complicated configuration.

### [Disclosure]

### [Technical Problem]

An object of the present invention is to provide a coffee maker that can reduce an increase in maintenance costs, which is caused by deterioration of the durability of a tube due to high temperature water supplied through a soft tube.

In addition, an object of the present invention is to provide a coffee maker that can prevent water leakage from occurring due to cracks occurring in a soft tube with reduced durability.

In addition, an object of the present invention is to provide a coffee maker that can reduce the discharge of contaminants, including environmental hormones, due to hardening or aging of the tube due to continuous use of a soft tube.

In addition, an object of the present invention is to provide a coffee maker to prevent water leakage from a joint area between a nozzle and a tube due to expansion of the soft tube by high-temperature water.

In addition, an object of the present invention is to provide a coffee maker that reduces the accumulation of fatigue load on the nozzle and parts supporting the nozzle by reducing the transfer of the load on the soft tube to the nozzle.

In addition, an object of the present invention is to provide a coffee maker that can smoothly supply water by improving the phenomenon of twisting of the soft tube as it moves with the nozzle.

In addition, an object of the present invention is to provide a coffee maker to solve the problem that when the tube is made of a single pipe structure in the shape of a straight pipe, the nozzle moves only in a linear direction, increasing the appearance of the product due to the need for a separate motor to rotate the dripper.

The objects of the present invention are not limited to the objects mentioned above, and other objects and advantages of the present invention that are not mentioned can be understood by the following description and will be more clearly understood by the embodiments of the present invention. In addition, it will be readily apparent that the objects and advantages of the present invention can be realized by the means and combinations thereof indicated in the claims.

### [Technical Solution]

The coffee maker according to the present invention for solving the problems described above has a technical feature in that a plurality of supply pipes are rotatably connected, and water is supplied through the inside of the supply pipes.

Specifically, a first supply pipe and second supply pipe that have rigid materials are rotatably connected, and high-temperature water heated in a water tank sequentially passes through a first supply pipe and second supply pipe and is supplied to a dripper.

In addition, a coffee maker according to the present invention has a technical feature of supplying water to the dripper using a metal supply pipe.

Specifically, since high-temperature water is supplied using a supply pipe made of metal, which has improved durability compared to a soft tube, the phenomenon of cracks occurring in the supply pipe can be prevented.

In addition, since a coffee maker according to the present invention uses a metal supply pipe, it can prevent hardening of the supply pipe and the discharge of contaminants, including environmental hormones, compared to a method using a soft tube.

In addition, a coffee maker according to the present invention has a technical feature in that there is no connection portion between a nozzle and a supply pipe.

Specifically, since a first water outlet nozzle and first body pipe are integrally connected, or a joint part of the first water outlet nozzle and first body pipe is fixed, it can block water leakage between the first water outlet nozzle and the first body pipe. Alternatively, since a second water outlet nozzle and second pipe body are integrally connected, or a joint part of the second water outlet nozzle and second pipe body is fixed, it can block water leakage between the second water outlet nozzle and the second pipe body.

In addition, a coffee maker according to the present invention has a technical feature in that it uses a metal supply pipe to prevent the load from being concentrated on a nozzle through which water is discharged.

Specifically, since a supply pipe formed of a metal material is rotatably supported by a connection socket, it can reduce the load from the supply pipe being transferred to the nozzle and water outlet arm.

In addition, since a coffee maker according to the present invention forms the supply pipe using a rigid material, twisting of the supply pipe can be prevented when the supply pipe moves with the water outlet arm.

In addition, a coffee maker according to the present invention has a technical feature in that a plurality of supply pipes are rotatably connected to allow movement in various directions along the water outlet arm from the upper side of the dripper.

Specifically, the first supply pipe and second supply pipe are rotatably connected, the first supply pipe is rotatably connected to a connection socket, and the second supply pipe is rotatably connected to the water outlet arm. Thus, the nozzle provided in the supply pipe can be moved in various directions.

A coffee maker according to the present invention may include at least one of a dripper, a water outlet module, a case part, a grinder, a water tank, a heating part, a server, a water tank, a heating part, and a case part.

The water outlet module is located on the lower side of the grinder, the dripper is located on the lower side of the water outlet module, and the server is located on the lower side of the dripper. The water tank and heating part are installed in the case part, and water from the water tank is supplied to the supply pipe of the water outlet module through a water pump.

The dripper receives ground coffee and water through the open upper side, extracts coffee from the ground coffee, and discharges the coffee to the bottom. The dripper is installed between the water outlet module and the server.

The water outlet module is located on the upper side of the dripper and supplies water to the inside of the dripper. The water outlet module includes a supply pipe, a water outlet arm, a first moving part, and a second moving part. The water outlet module may further include a water pump, a connection socket, a movable housing part, and a position measurement part.

The supply pipe is rotatably connected to a plurality of pipes, and water is supplied through the inside of the pipe. The supply pipe is made of metal pipe. The supply pipe includes a first supply pipe and a second supply pipe.

The first supply pipe has a first inner pipe that guides the movement of water. The first supply pipe is made of metal. In addition, the first supply pipe has a " 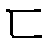 " shaped flow path.

The first supply pipe includes a first inlet pipe, a first body pipe, and a first outlet pipe.

The first inlet pipe extends in the upward-downward direction and guides water that has passed through the water pump upward. The connection socket is provided between the first inlet pipe and the water pump, and the first inlet pipe can rotate while connected to the connection socket.

The first body pipe is connected to the first inlet pipe and extends in a lateral direction to guide the movement of water in a horizontal direction.

The first outlet pipe extends downward from the first body pipe and is coupled to the second supply pipe. In addition, the first outlet pipe guides water that has passed through the first body pipe to the inside of the second supply pipe.

One side of the second supply pipe is rotatably connected to the first supply pipe, and the other side of the second supply pipe is rotatably connected to the water outlet arm. The second supply pipe is provided with a second inner pipe that communicates with the first inner pipe and guides the movement of water.

The second supply pipe includes a second inlet pipe, a second body pipe, and a first water outlet nozzle.

The second supply pipe includes a second inlet pipe located on the same axis as the first outlet pipe and rotatably connected to the first outlet pipe, a second body pipe connected to the second inlet pipe and extending in the lateral direction, and a first water outlet nozzle extending downward from the first body pipe and rotatably connected to the water outlet arm.

The first supply pipe is located above the second supply pipe, and the water moved through the first inner pipe falls into the second inner pipe and then moves in the horizontal direction to be discharged downward.

If a length in the upward-downward direction of the first outlet pipe is referred to as a first length, and a length in the upward-downward direction of the second inlet pipe is referred to as a second length, the first length is formed to be longer than the second length.

The first supply pipe includes a first connection pipe, a first conduit body, and a first discharge pipe. The first connection pipe extends in the upward-downward direction and is a pipe that guides water that has passed through the water pump upward. The first pipe body is connected to the first connection pipe and extends in the lateral direction. The first discharge pipe extends downward from the first pipe body and is coupled to the second supply pipe. The first discharge pipe guides the water that has passed through the first pipe body to the inside of the second supply pipe through a discharge hole provided on the side surface of the first discharge pipe.

The lower end of the first discharge pipe penetrates the second supply pipe and protrudes downward from the second supply pipe. The supply pipe includes a mounting ring that is mounted on the outside of the first discharge pipe protruding below the second supply pipe and hangs on the lower side of the second supply pipe. The mounting ring is an E-shaped ring.

The second supply pipe includes a second pipe body and a second water outlet nozzle. The second pipe body has a hole-shaped mounting hole part for connection to the first discharge pipe. The second pipe body guides the water discharged through the discharge hole to the lateral direction. The second water outlet nozzle extends to the lower side of the second pipe body and is rotatably connected to the water outlet arm. The second pipe body rotates around the first discharge pipe.

The water outlet is rotatably connected to the supply pipe. In addition, the water outlet arm is rotatably connected to the second supply pipe provided in the supply pipe. The water outlet arm includes a mounting body rotatably coupled to the first moving part, a first arm extending from the mounting body and connected to the second supply pipe, and a second arm extending from the mounting body and engaging a gear provided in the second moving part.

The first moving part rotatably supports the water outlet arm and moves the water outlet arm in the circumferential direction. The first moving part includes a first ring gear, a rotational support protrusion, a second drive motor, and a first connection gear.

The first ring gear extends in a ring shape, and a first external gear is provided along the outer circumference. The rotational support protrusion protrudes from the first ring gear and rotatably supports the water outlet arm.

The first drive motor supplies power to rotate the first ring gear. The first connection gear transmits the power of the first drive motor to the first ring gear.

The second moving part is installed in succession to the first moving part and includes a gear engaged with the water outlet arm. The second moving part rotates in the same direction as the first moving part, and rotates the water outlet arm by a speed difference from the first moving part. The second moving part includes a second ring gear, a second drive motor, and a second connection gear.

The second ring gear extends in a ring shape above the first ring gear, and a second external gear is provided along the outer circumference. An inner gear that engages with the water outlet arm is provided inside the second ring gear.

The second drive motor supplies power to rotate the second ring gear. The second connection gear transmits the power of the second drive motor to the second ring gear.

The mobile housing part supports the first moving part and second moving part and is fixed to the case part. The movable housing part includes a lower housing part installed in a shape that surrounds the lower side of the second moving part, and an upper housing part that is located above the lower housing part and installed in a shape that surrounds the upper side of the first moving part.

The position measurement part measures the position of the first ring gear and the position of the second ring gear and transmits the measured values to the control part. The position measurement unit includes a first measurement part and a second measurement part.

The first measurement part includes a first measurement sensor mounted on the movable housing part and a first magnet mounted on the first ring gear. The first measurement part is a Hall sensor and detects the position of the first magnet rotating together with the first ring gear.

The second measurement part includes a second measurement sensor mounted on the movable housing part and a second magnet mounted on the second ring gear. The second measurement part is a Hall sensor and detects the position of the second magnet rotating together with the second ring gear.

The water pump operates with supply of electricity, and supplies the water delivered through the water tank to the supply pipe. The supply pipe may be directly connected to the water pump, and an additional connection socket may be installed between the supply pipe and the water pump.

The connection socket includes one side to which the pipe connected to the water pump is connected, and the other side connected to the supply pipe. The first inlet pipe of the supply pipe is rotatably connected to the connection socket. The first body pipe and first inlet pipe are installed to be rotatable about the connection socket.

The case part forms the exterior of a coffee maker product. A dripper, water outlet module, grinder, server, water tank, and heating part are installed in the case part.

The grinder is installed in the case part, grinds the coffee beans, and discharges them to the bottom. The grinder receives the power from the grinding motor and grinds the coffee beans.

The server is located below the dripper and is a container that holds the coffee extracted from the dripper.

The water tank forms a space for storing water and is detachably installed in the case part.

The heating part is located on the lower side of the water tank and heats the heating plate provided in the water tank using electromagnetic induction heating.

### [Advantageous Effects]

The coffee maker according to the present invention supplies high-temperature water through the inside of a plurality of rigid supply pipes, thereby improving the durability of the supply pipe and reducing maintenance costs compared to the existing method using soft tubes.

In addition, since the present invention supplies high-temperature water using a metal supply pipe, it is possible to prevent safety accidents by blocking cracks and water leaks in the pipe compared to the existing method using soft tubes.

In addition, the present invention uses a metal supply pipe to block hardening of the supply pipe, so it is possible to block the discharge of contaminants including environmental hormones.

In addition, the present invention can reduce maintenance costs by blocking water leakage between the first water outlet nozzle and the first body pipe, or by blocking water leakage between the second water outlet nozzle and the second pipe body.

In addition, in the present invention, since the supply pipe is made of a metal material and is rotatably supported on the connection socket, the accumulation of fatigue load on the nozzle and water outlet arm can be reduced, thereby improving the durability and operational reliability of the parts.

In addition, the present invention supplies water to the dripper using the supply pipe in the shape of a steel pipe that is not bent, so that twisting of the supply pipe can be prevented and a water supply operation can be easily performed.

In addition, in the present invention, the first supply pipe and second supply pipe are rotatably connected and can move in various directions together with the water outlet arm, so a separate motor to rotate the dripper is not required, thereby reducing the external size of the product and reducing product production costs.

In addition to the above-described effects, specific effects of the present invention are described below while explaining specific details for carrying out the invention.

### [Description of Drawings]

FIG. 1 is a perspective view of a coffee maker according to an embodiment of the present invention.
FIG. 2 is a front view of a coffee maker according to an embodiment of the present invention.
FIG. 3 is a cross-sectional view of a coffee maker according to an embodiment of the present invention.
FIG. 4 is a perspective view illustrating a main configuration of a coffee maker according to an embodiment of the present invention.
FIG. 5 is a perspective view illustrating a state in which a water outlet module is separated from a coffee maker according to an embodiment of the present invention.
FIG. 6 is a perspective view illustrating a water outlet module according to an embodiment of the present invention.
FIG. 7 is an exploded perspective view of a water outlet module according to an embodiment of the present invention.
FIG. 8 is a perspective view illustrating a supply pipe according to an embodiment of the present invention.
FIG. 9 is an exploded perspective view illustrating a supply pipe according to an embodiment of the present invention.
FIG. 10 is a cross-sectional view illustrating a disassembled state of a first outlet pipe and second inlet pipe according to an embodiment of the present invention.
FIG. 11 is a cross-sectional view illustrating a state in which a first outlet pipe and second inlet pipe are coupled according to an embodiment of the present invention.
FIG. 12 is a perspective view illustrating a state in which a water outlet arm is engaged with an inner gear according to an embodiment of the present invention.
FIGS. 13 to 24 are plan views illustrating a state in which a supply pipe is moved along with a water outlet arm according to an embodiment of the present invention.
FIG. 25 is a perspective view illustrating a supply pipe according to another embodiment of the present invention.
FIG. 26 is a perspective view illustrating a state in which a first supply pipe and second supply pipe are connected according to another embodiment of the present invention.
FIG. 27 is a partially cutaway perspective view illustrating a state in which a first supply pipe and second supply pipe are separated according to another embodiment of the present invention.
FIG. 28 is a partially cutaway perspective view illustrating an assembled state of a first supply pipe and second supply pipe according to another embodiment of the present invention.

### [Mode for Invention]

The above-described objectives, features and advantages are specifically described with reference to the attached drawings hereunder such that one having ordinary skill in the art to which the present invention pertains may easily implement the technical spirit of the present invention. In describing the present invention, detailed description of known technologies in relation to the present invention is omitted if it is deemed to make the gist of the present invention unnecessarily vague. Below, preferred embodiments of the present invention are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and. a first component may be a second component unless stated to the contrary.

Hereinafter, when any component is arranged at "an upper portion (or a lower portion)" of the component or "on (or under") of the component, any component can be arranged in contact with an upper surface (or a lower surface) of the component, and another component can be interposed between the component and any component arranged on (or under) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component.

Throughout the specification, each component may be provided as a single one or a plurality of ones, unless explicitly stated to the contrary.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

In the present invention, the term "whole beans" refers to roasted coffee beans, not raw coffee beans harvested from coffee trees. The roasted coffee beans can be classified according to a roasted degree. For example, dark roasted coffee that is roasted for a long time can dissolve coffee ingredients in water more easily than light roasted coffee.

In addition, in the present invention, the size of coffee powder, which is ground coffee, can be differently set according to preference and type of coffee bean. Therefore, coffee powder having a preset size refers is not the coffee powder of a specific size, but can vary depending on preference and type of coffee bean.

In addition, a coffee maker 1 of the present disclosure refers to an apparatus for mixing coffee powder, i.e., ground coffee, with water, dissolving coffee ingredients in water, and then extracting liquid coffee or coffee liquid. The coffee liquid refers to water containing coffee ingredients extracted from coffee powder.

Therefore, in the disclosure, extracting coffee liquid means bringing water into contact with coffee powder to create water containing coffee ingredients extracted from the coffee powder. Unless otherwise stated, coffee generally refers to coffee liquid, and coffee beans and coffee powder refer to coffee in solid form.

### [Overall structure of a coffee maker]

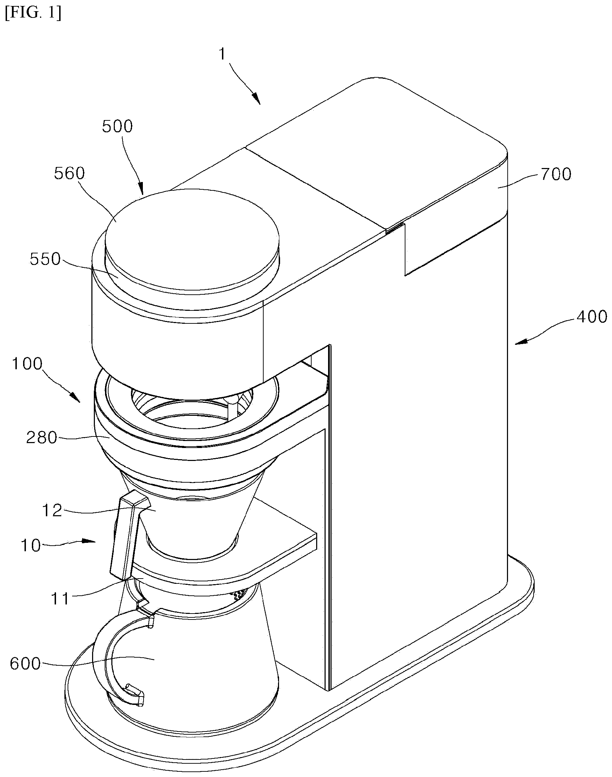

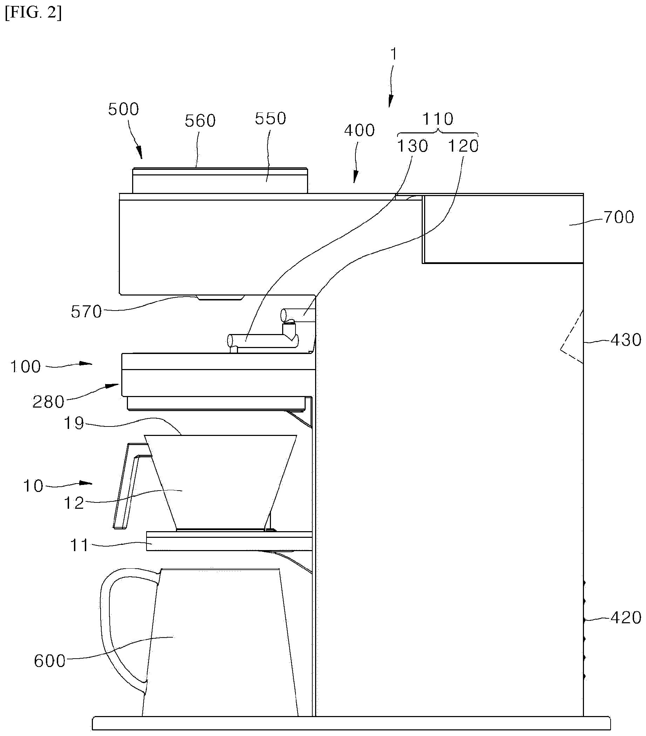

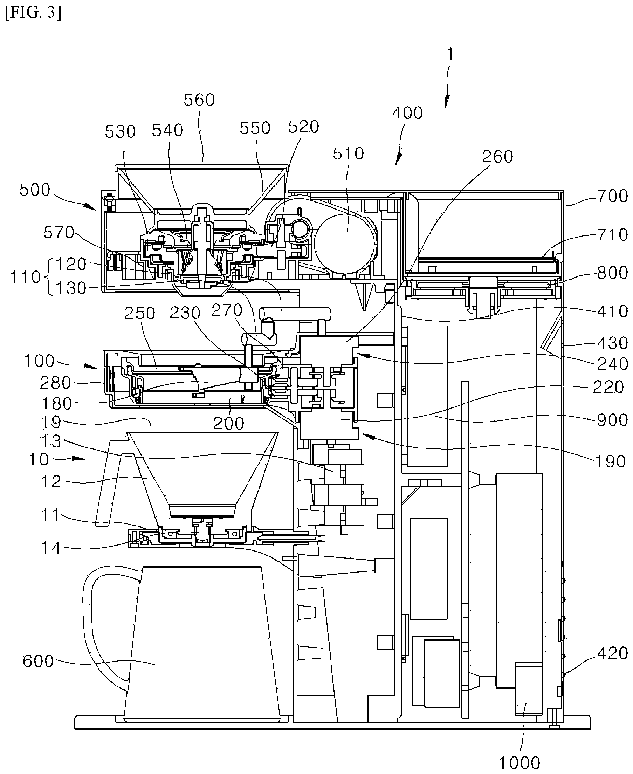

FIG. 1 is a perspective view of a coffee maker 1 according to an embodiment of the present invention, FIG. 2 is a front view of a coffee maker 1 according to an embodiment of the present invention, and FIG. 3 is a cross-sectional view of a coffee maker 1 according to an embodiment of the present invention.

As shown in FIGS. 1 to 3, a coffee maker according to one embodiment of the present invention is installed in an upright position. The coffee maker includes a case part 400, a grinder 500, a water outlet module 100, a dripper 10, a server 600, a water tank 700, a heating part 800, and a control part 900.

The case part 400 extends in the upward-downward direction and supports each component constituting the coffee maker 1. The grinder 500, water outlet module 100, dripper 10, and server 600 are disposed in front (on the left side in FIG. 3) of the case part 400 according to an embodiment of the present invention. Also, the water tank 700, heating part 800, and control part 900 are installed at the rear of the case part 400 (on the right side in FIG. 3).

Since the water tank 700 is detachably installed in the case part 400, water supply and cleaning of the water tank 700 can be easily performed.

The heating part 800 is installed on the lower side of the water tank 700, and the water stored in the water tank 700 is heated by the operation of the heating part 800.

The control part 900 is installed below the heating part 800, and the coffee maker 1 is operated by a control signal from the control part 900.

The water tank 700, heating part 800, and control part 900 are installed at the rear of the case part 400, and the front and rear of the case part 400 are partitioned by a support partition 410. The support partition 410 has a plate shape extending in the upward-downward direction.

The grinder 500 located in front of the case part 400 has an open upper side to receive coffee beans. The grinder 500 according to an embodiment of the present invention includes a funnel-shaped hopper 550 and an upper cover 560 that opens and closes the upper side of the hopper 550. The open upper side of the hopper 550 is opened and closed by the upper cover 560.

In addition, the grinder 500 includes a support housing 570 fixed to the case part 400. The hopper 550 is installed on the upper side of the support housing 570, and a grinding gear 540 is provided on the lower side of the hopper 550. A grinding motor 510, which is the power source of the grinder 500, is fixed to the case part 400, and the power generated by the operation of the grinding motor 510 rotates the grinding gear 540 and grinds the coffee beans discharged to the lower side of the hopper 550.

The coffee beans ground in the grinder 500 turn into powder and fall to the lower side of the grinder 500. The coffee powder that falls to the lower side of the grinder 500 falls to the dripper 10 through the inside of the water outlet module 100.

The water outlet module 100 is installed between the grinder 500 and the dripper 10 to supply water to the upper side of the dripper 10. The water outlet module 100 supplies the water supplied through the water tank 700 to the inside of the dripper 10. The water supply pipe 110 moves by the operation of the two motors provided in the water outlet module 100, and supplies water to the inside of the dripper.

The dripper 10 has an open top, and stores coffee beans ground in the grinder 500 inside thereof. In addition, heated water is supplied through the water supply pipe 110 provided in the water outlet module 100, and liquid coffee is extracted downward.

The server 600 is a container containing liquid coffee and is located below the dripper 10.

A direction is defined. Centering on the support partition 410 installed inside the case part 400, the front (left side in FIG. 3) and rear (right side in FIG. 3) of the case part 400 are divided.

### [Detailed configuration of parts of a coffee maker]

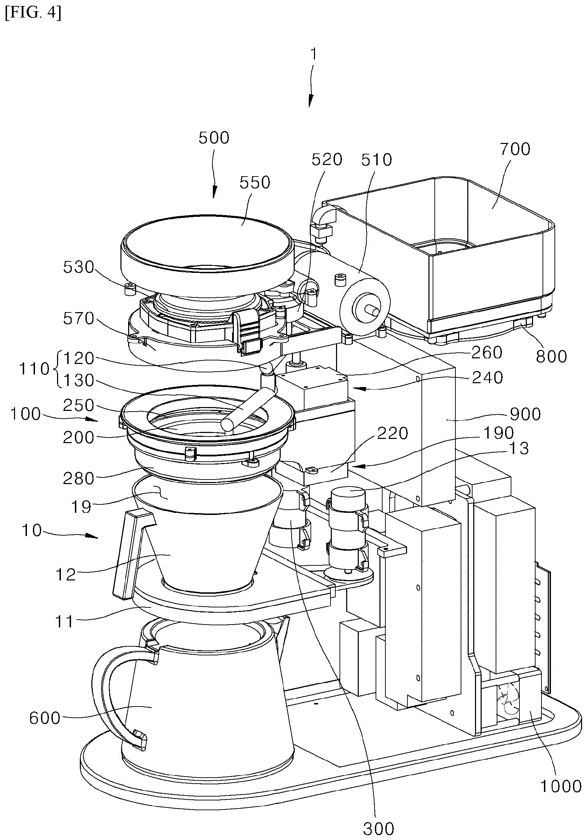

FIG. 4 is a perspective view illustrating the main configuration of the coffee maker 1 according to an embodiment of the present invention.

As shown in FIGS. 3 and 4, the coffee maker 1 according to an embodiment of the present invention may include at least one of the case part 400, grinder 500, water outlet module 100, dripper 10, a server 600, water tank 700, heating part 800, and control part 900.

The water outlet module 100 is located below the grinder 500, the dripper 10 is located below the water outlet module 100, and the server 600 is located below the dripper 10. The water tank 700 and heating part 800 are installed in the case part 400, and the water in the water tank 700 is supplied to the water supply pipe 110 of the water outlet module 100 through the water pump 300.

### [Case part]

The case part 400 forms the exterior of the coffee maker 1 product. The grinder 500, water outlet module 100, dripper 10, server 600, water tank 700, heating part 800, and control part 900 are installed in the case part 400. A panel-shaped support partition 410 extends in the upward-downward direction inside the case part 400.

The grinder 500, water outlet module 100, dripper 10, and server 600 are installed in front of the case part 400, which constitutes the exterior of the coffee maker 1, and the water tank 700, heating part 800, and control part 900 are installed at the rear of the case part 400.

The support partition 410 divides a space in front of the case part 400 and a space in the rear of the case part 400. Since the support partition 410 is installed, heat dissipation from the control part 900, heating part 800, etc. installed at the rear of the case part 400 is quickly achieved.

A blowing fan 1000 for heat dissipation is installed at the rear of the case part 400, and the case part 400 is provided with an inlet hole 420 and discharge hole 430 for air movement. Therefore, the air, which has moved to the inside of the case part 400 through the inlet hole 420, passes through the blowing fan 1000, cools the control part 900 and heating part 800 in order, and then is exhausted to the outside of the case part 400 through a discharge hole 430.

Since the support partition 410 is installed inside the case part 400, a space for heat dissipation is reduced, and the control part 900 and heating part 800 can be cooled quickly, thereby improving the durability of the parts.

In addition, even if some of the water coming out of the water outlet module 100 splashes into the control part 900, the movement of water toward the control part 900 is blocked by the support partition 410. Therefore, when water from the water outlet module 100 moves to the control part 900 and heating part 800, the movement of water is blocked by the support partition 410 to prevent malfunction of the control part 900 and heating part 800.

### [Grinder]

The grinder 500 is installed in the case part 400 and can be transformed into various shapes within the technical idea of grinding coffee beans and discharging them to the bottom. The grinder 500 according to the present invention receives power from the grinding motor 510 and grinds coffee beans.

The grinder, which is a grinding module that grinds coffee beans, grinds coffee beans to produce coffee powder of a set size or less. Because a grinding degree varies depending on the type of coffee and a degree of extraction may also vary, the grinding degree may change depending on the user's choice or type of coffee.

The grinder 500 is disposed on the upper side of the dripper 10 so that the coffee powder discharged from the grinder 500 falls on the inside of the dripper 10. In addition, the water outlet module 100 that supplies water to the inside of the dripper 10 is also disposed on the upper side of the dripper 10.

Since the grinder 500 has a relatively large size, in case that the water outlet module 100 is disposed above the grinder 500, when water falls downward from the water outlet module 100 toward the dripper 10, the supply of water may be interrupted by the grinder 500. Accordingly, the water outlet module 100 is disposed between the grinder 500 and the dripper 10.

The grinder 500 according to an embodiment of the present invention includes a grinding motor 510, a transmission gear 520, a rotator 530, a grinding gear 540, a hopper 550, an upper cover 560, and support housing 570.

The grinding motor 510 receives electrical energy and generates rotational power. The grinding motor 510 is fixed to the case part 400, and the power of the grinding motor 510 is transmitted to the rotator 530 through the transmission gear 520.

The transmission gear 520 includes a plurality of gears, including a gear connected to the output shaft of the grinding motor 510, and the respective gears engage and rotate to transmit the power of the grinding motor 510.

The support housing 570 is fixed to the case part 400. The rotator 530 is rotatably fixed inside the support housing 570. In addition, teeth are formed on the outer peripheral surface of the rotator 530, and the transmission gear 520 engages with the outer peripheral surface of the rotator 530 to rotate.

The grinding gear 540 is installed inside the rotator 530 to grind coffee beans. When the rotator 530 rotates and the grinding gear 540 also rotates, the coffee beans discharged to the lower side of the hopper 550 are ground.

The hopper 550 is shaped like a funnel, and its cross-sectional area gradually narrows downward. The upper and lower sides of the hopper 550 are open, and the hopper 550 is fixed to the support housing 570 or case part 400.

The upper cover 560 is installed at the open inlet of the hopper 550. The upper cover 560 opens and closes the upper inlet of the hopper 550, thereby blocking coffee beans inside the hopper 550 from moving to the outside of the hopper 550.

### [Dripper]

The dripper 10 receives ground coffee and water through the open upper side, extracts coffee from the ground coffee, and discharges the coffee to the lower side. The dripper 10 is installed between the water outlet module 100 and the server 600.

The inside of the dripper 10 is provided with a space for containing the filter and coffee powder. The dripper 10 is provided with a space to contain high-temperature water supplied through the water outlet module 100 and coffee powder supplied through the grinder 500. The coffee powder contained in the dripper 10 comes into contact with water to extract coffee, which is liquid coffee.

The dripper 10 includes a container 12 with an open top, and a filter accommodated within the container 12. The container 12 and filter are open at the top, and coffee powder and water are received in the filter. Only the liquid coffee created when coffee powder and water meet flows down the bottom of the filter, and the coffee powder gets caught in the filter and is located inside the filter.

The container 12 serves to stably support the filter. The container 12 is shaped like a funnel to facilitate guiding the coffee liquid downward.

The dripper 10 according to an embodiment of the present invention may include a support housing 11, a container 12, an opening/closing motor 13, and a dripper valve 14.

When discharging the coffee liquid to the lower side of the container 12, the user can directly open and close the lower side of the container 12, and can automatically open and close the lower side of the container 12 using an electric device.

The support housing 11 extends in the horizontal direction and is fixed to the case part 400. The container 12 is located on the upper side of the support housing 11. Since the container 12 is detachably installed in the support housing 11, the inside of the container 12 can be easily cleaned.

The opening/closing motor 13 is fixed to the case part 400 and receives electrical energy to provide rotational power. The rotational power of the opening and closing motor 13 is transmitted to the dripper valve 14 installed on the lower side of the container 12 through a plurality of gears.

Since the outlet provided on the lower side of the container 12 is opened and closed by the rotation of the dripper valve 14, the coffee liquid can be automatically discharged through the outlet of the container 12. As for the dripper valve 14, various types of opening and closing valves can be used within the technical idea of opening and closing the outlet provided on the lower side of the container 12 through a rotation operation.

### [Server]

The server 600 is located below the dripper 10 and is a container that holds the coffee extracted from the dripper 10. The server 600 receives and stores the coffee liquid discharged through the outlet of the dripper 10. In addition, the server 600 is detachably installed on the coffee maker 1 so that the coffee stored in the server 600 can be moved to another location.

### [Water supply tank]

The water tank 700 forms a space for storing water and is detachably installed in the case part 400. The water contained in the water tank 700 is heated to a set temperature by heating the hot plate 710 provided inside the water tank 700.

The water tank 700 may be detachably installed in the case part 400. In addition, the water tank 700 may include a water level sensor that measures the water level of the stored water, and a temperature sensor that measures the temperature of the water stored in the water tank 700.

### [Heating part]

The heating part 800 is located below the water tank 700 and heats the heating plate 710 provided in the water tank 700 by electromagnetic induction heating. The heating part 800 heats the hot plate 710 using an induction heating method. Since the heating part 800 heats the hot plate 710 using the induction heating principle, the time required to heat the hot plate 710 can be reduced.

### [Control part]

The control part 900 installed below the heating part 800 is located inside the case part 400. The control part 900 is a device that controls components included in the coffee maker 1 and includes electrical components such as a PCB.

As an example, the control part 900 may include a board, a processor and electronic components mounted on the board. In addition, the control part 900 may control the operation of the electric device provided in the water outlet module 100 to operate the water outlet module 100. In addition, the control part 900 controls the operation of all components described in the present invention.

### [Water outlet module]

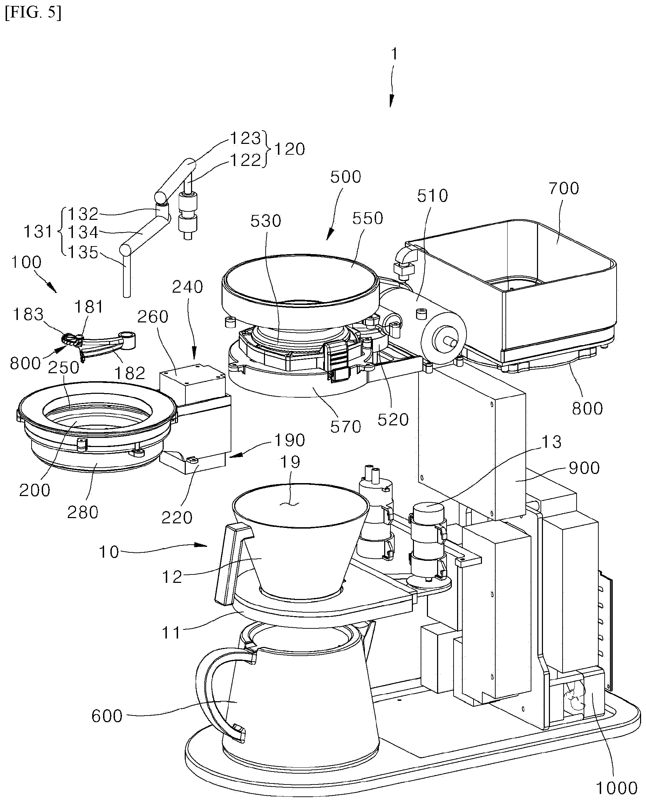

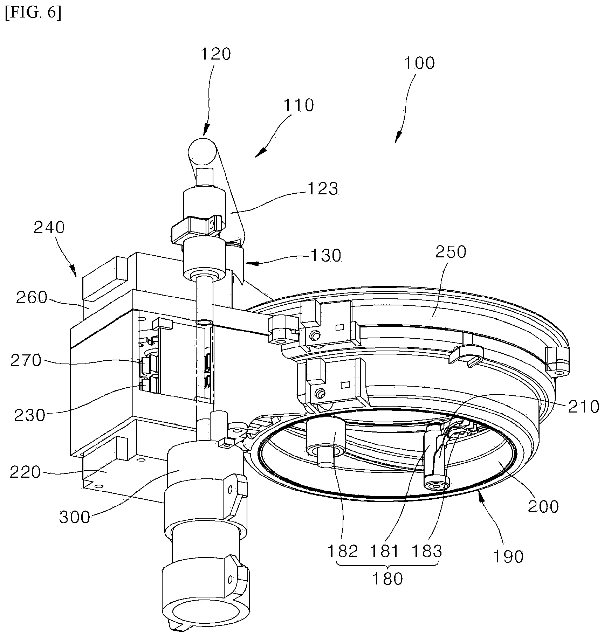

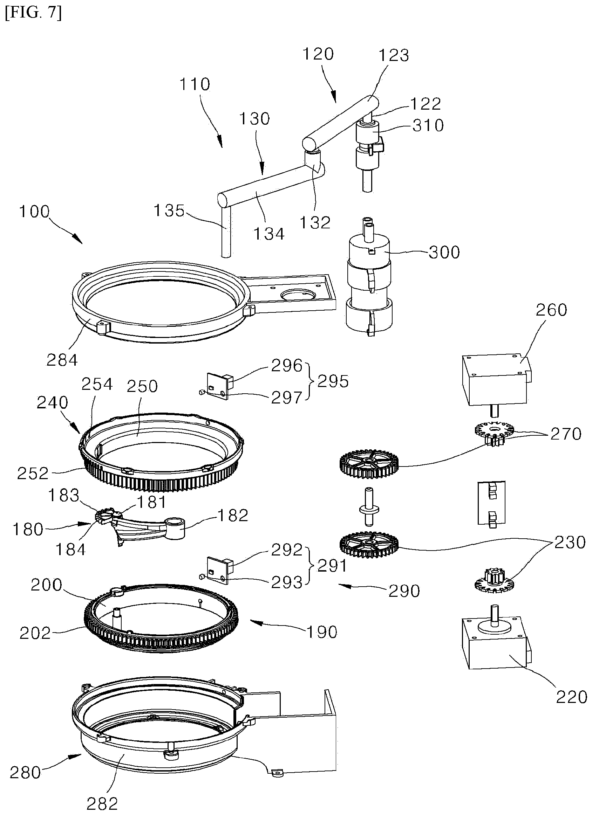

FIG. 5 is a perspective view illustrating the water outlet module 100 separated from the coffee maker 1 according to an embodiment of the present invention, FIG. 6 is a perspective view illustrating the water outlet module 100 according to an embodiment of the present invention, and FIG. 7 is an exploded perspective view illustrating the water outlet module 100 according to an embodiment of the present invention.

As shown in FIGS. 5 to 7, the water outlet module 100 is located on the upper side of the dripper 10 and supplies water to the inside of the dripper 10. The water outlet module 100 supplies the water supplied through the water tank 700 to the inside of the dripper 10 containing coffee powder.

In order for the water discharged from the water outlet module 100 to fall inside the dripper 10 by gravity, the nozzle of the water outlet module 100 is located on the upper side facing the inlet of the dripper 10.

The water outlet module 100 may include a heating device that heats water. In addition, the water outlet module 100 can receive heated hot water from an external water supply source, or can receive heated water through the water tank 700.

Therefore, the water outlet module 100 can supply heated water to the coffee powder in the dripper 10 by discharging heated water. In addition, the water outlet module 100 receives unheated room temperature water and can supply room temperature water to the coffee powder in the dripper 10.

The water supply pipe 110 is connected to the water outlet arm 180 provided in the water outlet module 100, and the water supply pipe 110 moves along with the movement of the water outlet arm 180. The inside of the water outlet module 100 is provided with a hollow extending in the upward-downward direction, and coffee powder falls through the hollow provided in the water outlet module 100.

The coffee powder that falls from the grinder 500 installed on the upper side of the water outlet module 100 falls to the dripper 10 through the hollow provided in the water outlet module 100. In order to minimize the phenomenon in which coffee powder falling into the dripper 10 hits the water outlet arm 180 or water supply pipe 110, the water outlet arm 180 and water supply pipe 110 are positioned away from the movement path of the coffee powder.

The water supply pipe 110 is provided with a first water outlet nozzle 135 for discharging water. The first water outlet nozzle 135 is rotatably connected to the water outlet arm 180, and as the water outlet arm 180 moves, the first water outlet nozzle 135 also moves to supply water to the upper side of the coffee powder contained in the dripper 10.

The water outlet module 100 is configured so that the first water outlet nozzle 135, which supplies water, moves with a high degree of freedom. The water outlet arm 180, which guides the movement of the water supply pipe 110, rotates and revolves on the upper side of the dripper 10.

The inlet 19 of the dripper provided on the upper side of the dripper 10 forms a circular hole. The upper side of the dripper 10 is opened to form an inlet 19 of the dripper. The water and ground coffee fall into the inside of the dripper 10 through the inlet 19 of the dripper.

The water outlet arm 180 is installed on the upper side of the inlet 19 of the dripper, and the water outlet arm 180 moves along the circumference of the inlet 19 of the dripper. Due to the operation of the first moving part 190, the water outlet arm 180 revolves around the inlet 19 of the dripper. Also, due to the operation of the second moving part 240, the water outlet arm 180 rotates.

The water supply pipe 110 is rotatably installed in the water outlet arm 180. In addition, the water outlet arm 180 may revolve around a vertical shaft passing through the radial center of the dripper 10.

The water outlet arm 180 moves together with the water supply pipe 110 and adjusts the position of water falling from the water supply pipe 110. The second supply pipe 130 is rotatably connected to the water outlet arm 180 according to an embodiment of the present invention, and the position of water falling from the second supply pipe 130 is adjusted.

The first moving part 190 and second moving part 240 provided in the water outlet module 100 operate individually, and the control part 900 operates the rotation and revolution movements of the water outlet arm 180 simultaneously or separately.

Therefore, the water outlet module 100 of the present invention can implement a nozzle motion optimized for coffee extraction by uniformly supplying water to the coffee powder contained in the dripper 10. In addition, the water outlet module 100 of the present invention can provide a high degree of freedom with respect to movement of the first water outlet nozzle 135 that discharges water. Accordingly, the water outlet module 100 of the present invention can freely modify the motion and trajectory of the first water outlet nozzle 135, if necessary, and thus various coffee extraction recipes can be implemented.

The water outlet module 100 according to an embodiment of the present invention includes the water supply pipe 110, the water outlet arm 180, the first moving part 190, and the second moving part 240. In addition, the water outlet module 100 may further include at least one of the water pump 300, connection socket 310, movable housing part 280, and a position measurement part 290.

### [Supply pipe]

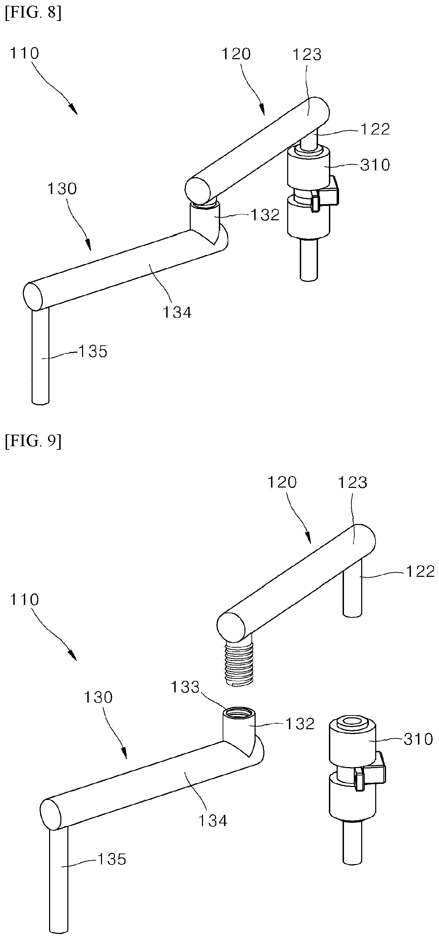

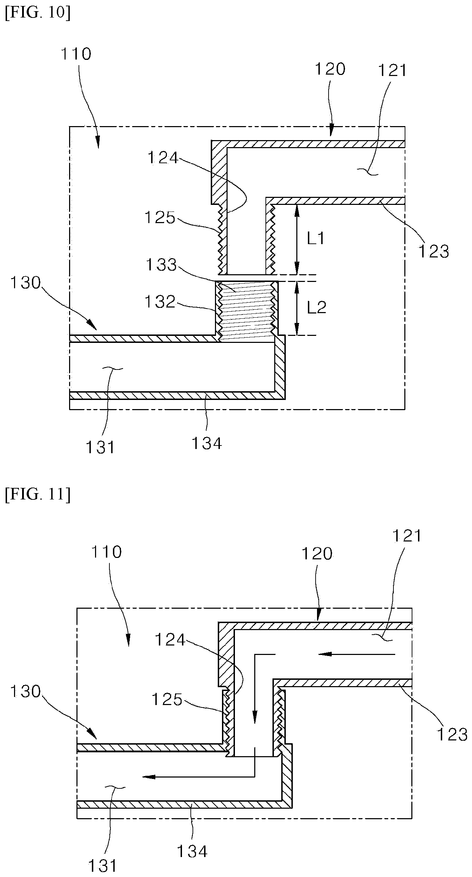

FIG. 8 is a perspective view illustrating the water supply pipe 110 according to an embodiment of the present invention, FIG. 9 is an exploded perspective view illustrating the water supply pipe 110 according to an embodiment of the present invention, FIG. 10 is a cross-sectional view illustrating a disassembled state of the first outlet pipe 124 and second inlet pipe 132 according to an embodiment of the present invention. FIG. 11 is a cross-sectional view illustrating a state in which the first outlet pipe 124 and second inlet pipe 132 are coupled according to an embodiment of the present invention.

As shown in FIGS. 8 to 11, the water supply pipe 110 according to the present invention has a plurality of pipes rotatably connected, and water is supplied through the inside of the pipes. In addition, the water supply pipe 110 uses a pipe made of a metal material or pipe made of a material that does not bend.

The water supply pipe 110 according to an embodiment of the present invention is made of a rigid type that does not deform in shape at room temperature. Considering the temperature at which heated water is supplied, the supply pipe uses a pipe that does not bend or deform in shape in the temperature range of 0°C to 120°C. The water supply pipe 110 can be formed using various types of rigid-type materials such as reinforced plastic or metal.

The water supply pipe 110 according to an embodiment of the present invention may be made of a metal material.

In conventional coffee machines, the hose that supplies water is mostly made of silicone or soft materials.

In existing drip coffee machines, the internal flow path is mostly composed of silicone hose or soft hose. As in the conventional art, when the pipe supplying water to the dripper 10 uses a bendable hose, its durability against heat is weaker than that of a metal pipe, and pollutants may be emitted when used for a long period of time. Therefore, the durability of the conventional soft hose is lower than that of the water supply pipe 110 according to the present invention, raising concerns about increased maintenance costs due to hose replacement and hygiene due to aging.

In the present invention, the first water outlet nozzle 135 provided in the water outlet module 100 can move in a spiral manner and the water supply pipe 110 is formed from a material having rigidity. In addition, since a plurality of pipes are rotatably connected, the first water outlet nozzle 135 can move in a spiral manner.

Since the water supply pipe 110 according to the present invention replaces the conventional silicon hose, the problem of deterioration in hygiene due to aging of the silicon hose can be solved.

In addition, when a conventional silicon hose is connected to the water outlet arm 180, the load is transferred to the water outlet arm 180 due to sagging of the silicone hose, thereby increasing the load on the water outlet arm 180. However, since the water supply pipe 110 of the present invention uses a pipe with rigidity, the shape of the water supply pipe 110 can be maintained without sagging, and the transfer of the load of the water supply pipe 110 to the water outlet arm 180 can be minimized.

The water supply pipe 110 according to an embodiment of the present invention includes at least one of a steel pipe, a metal pipe, and a stainless steel pipe. The water supply pipe 110 is installed in an erect shape and can be maintained in an erect state due to structural rigidity. In addition, the water supply pipe 110 replaces the conventional silicon hose and provides a structure that can freely maintain the spiral movement of the first water outlet nozzle 135.

In order for free spiral movement of the first water outlet nozzle 135, the water supply pipe 110 according to an embodiment of the present invention has a plurality of supply pipes rotatably connected, and water is supplied through the inside of the supply pipe. The number of supply pipes may be two, but is not limited thereto, and various modifications are possible, such as three or more supply pipes being connected in a joint form to form the water supply pipe 110.

The water supply pipe 110 according to an embodiment of the present invention supplies high-temperature water using a metal supply pipe with improved durability compared to a soft hose, so it is possible to prevent or reduce the occurrence of cracks as the durability of the pipe decreases due to heat hardening. Since the possibility of cracks occurring in the water supply pipe 110 is significantly reduced compared to the conventional soft hose, the possibility of water leakage or safety accidents occurring through cracked areas is also significantly reduced.

The water supply pipe 110 according to an embodiment of the present invention includes the first supply pipe 120 and the second supply pipe 130. The first supply pipe 120 and second supply pipe 130 that are rigid are rotatably connected. The high-temperature water heated in the water tank 700 flows through the first supply pipe 120 and second supply pipe 130 in order, and is supplied to the dripper 10.

Since the high-temperature water is supplied through the inside of the rigid first supply pipe 120 and second supply pipe 130, the durability of the water supply pipe 110 is improved compared to the conventional method using a soft tube, so maintenance costs can be reduced.

### [First supply pipe]

The first supply pipe 120 is provided with a first inner pipe 121 on the inside that guides the movement of water. The first supply pipe 120 may be made of a steel pipe. In addition, since the first supply pipe 120 is made of metal, durability due to heat can be improved, and durability can be improved compared to a soft hose.

The first supply pipe 120 forms a flow path that moves water moved from the lower side to the upper side in the horizontal direction and then guides the water to the lower side. That is, the first supply pipe 120 may be provided with a " 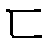 " shaped flow path, and within the technical idea of moving the water supplied from the water pump 300 in the horizontal direction and then delivering the water to the second supply pipe 130, it can be modified into various shapes.

The first supply pipe 120 according to an embodiment of the present invention includes a first inlet pipe 122, a first body pipe 123, and a first outlet pipe 124.

The first inlet pipe 122 has a pipe shape extending in the upward-downward direction and guides the water that has passed through the water pump 300 upward. The connection socket 310 may be additionally installed between the first inlet pipe 122 and the water pump 300.

The first inlet pipe 122 can rotate around the connection socket 310 while connected to the connection socket 310. When the first inlet pipe 122 is installed in the vertical direction, the first inlet pipe 122 can rotate about the vertical shaft. The first inlet pipe 122 passes through the center of the first inlet pipe 122 and can rotate around a shaft extending in the longitudinal direction of the first inlet pipe 122.

The first body pipe 123 is connected to the first inlet pipe 122 and extends in the lateral direction of the first inlet pipe 122, so that the movement of water moved upward by the first inlet pipe 122 is guided in the horizontal direction.

The first body pipe 123 and first inlet pipe 122 can be fixed by welding, etc., and the first inner pipe 121 that guides the movement of water is formed inside the first body pipe 123 and first inlet pipe 122.

The first outlet pipe 124 extends downward from the first body pipe 123 and is coupled to the second supply pipe 130. The first outlet pipe 124 guides the water that has passed through the first body pipe 123 to the inside of the second supply pipe 130.

The outside of the first inlet pipe 122 and first outlet pipe 124 forms a circular curved surface. A male thread 125 is formed on the outside of the first outlet pipe 124, and a female thread 133 is formed on the second inlet pipe 132 of the second supply pipe 130 to which the first outlet pipe 124 is coupled.

The outer diameter of the first outlet pipe 124 is equal to or smaller than the inner diameter of the second inlet pipe 132. Therefore, since the first outlet pipe 124 is inserted and fastened to the inside of the second inlet pipe 132, the first supply pipe 120 and second supply pipe 130 are connected.

If the length of the first outlet pipe 124 in the upward-downward direction is called a first length L1, and the of the second inlet pipe 132 in the upward-downward direction is called a second length L2, the first length L1 is formed to be longer than the second length L2.

Since the length of the second inlet pipe 132 in the upward-downward direction is shorter than the length of the first outlet pipe 124 in the upward-downward direction by 10mm or more, the first outlet pipe 124 rotates, making it easy to rotate with and couple to the second inlet pipe 132.

Meanwhile, the fastened length is adjusted so that rotation can be achieved even in a state where the first outlet pipe 124 is fastened to the second inlet pipe 132. When fastening of the first outlet pipe 124 is completed in a state where a portion of the male screw 125 provided on the first outlet pipe 124 is located on the upper side of the second inlet pipe 132, a rotation occurs at the connection portion of the first supply pipe 120 and second supply pipe 130 by the operation of the water outlet arm 180.

The first supply pipe 120 according to an embodiment of the present invention is located above the second supply pipe 130, and the water that has moved through the first inner pipe 121 falls into the second inner pipe 131 and then moves horizontally and is discharged downward.

### [Second supply pipe]

One side (right side in FIG. 9) of the second supply pipe 130 is rotatably connected to the first supply pipe 120, and the other side (left side in FIG. 9) of the second supply pipe 130 is rotatably connected to the water outlet arm 180. In addition, the second supply pipe 130 can be variously modified within the technical idea in which the second inner pipe 131 that communicates with the first inner pipe 121 of the first supply pipe 120 and guides the movement of water is provided.

The second supply pipe 130 according to an embodiment of the present invention includes the second inlet pipe 132, the second body pipe 134, and the first water outlet nozzle 135.

The second inlet pipe 132 is located on the same shaft as the first outlet pipe 124 and is rotatably connected to the first outlet pipe 124. The first outlet pipe 124 is rotatably fastened to the inside of the second inlet pipe 132.

The second body pipe 134 is connected to the second inlet pipe 132 and extends in the lateral direction. The second body pipe 134 guides the movement of water moved downward by the second inlet pipe 132 in the horizontal direction.

The first water outlet nozzle 135 extends downward from the first body pipe 123 and is rotatably connected to the water outlet arm 180. The outlet of the first water outlet nozzle 135 is provided at the bottom of the first water outlet nozzle 135, and the water that has fallen from the first water outlet nozzle 135 moves to the coffee powder stored in the dripper 10.

The first body pipe 123, first inlet pipe 122, and first water outlet nozzle 135 can be fixed by welding, etc., and the second inner pipe 131 that guides the movement of water is formed on the insides of the first body pipe 123, first inlet pipe 122, and first water outlet nozzle 135.

The first inlet pipe 122 of the first supply pipe 120 is rotatably mounted on the connection socket 310, and the first water outlet nozzle 135 is rotatably mounted on the water outlet arm 180. Since a bearing is installed on the water outlet arm 180 facing the first water outlet nozzle 135, the first water outlet nozzle 135 can be easily rotated.

The first inlet pipe 122 is rotatably installed in the connection socket 310, the first outlet pipe 124 is rotatably installed in the second inlet pipe 132, and the first outlet nozzle 135 is rotatably installed on the water outlet arm 180. Therefore, since the water supply pipe 110 rotates in three places, the movement of the first water outlet nozzle 135 can be freely controlled.

Since the first supply pipe 120 and second supply pipe 130 are rotatably connected and can move in various directions together with the water outlet arm 180, water can be uniformly supplied to the coffee powder contained in the dripper 10. Therefore, compared to an apparatus in which the nozzle moves only in a linear direction, a separate motor to rotate the dripper 10 is not required, thereby reducing the external size of the product and reducing product production costs.

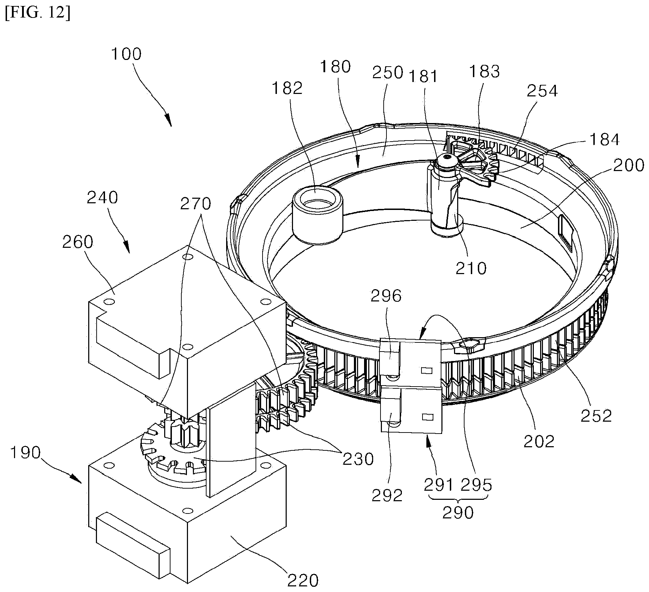

FIG. 12 is a perspective view illustrating a state in which the water outlet arm 180 is engaged with the inner gear 254 according to an embodiment of the present invention.

As shown in FIGS. 7 and 12, in order to install the water supply pipe 110 including the first supply pipe 120 and second supply pipe 130 in the water outlet module 100, interference with other parts installed on the water outlet module 100 must be considered. The water outlet module 100 includes the first moving part 190 and second moving part 240 for rotating the water outlet arm 180.

The first moving part 190 includes a first ring gear 200 and a first driving motor 220, and the second moving part 240 includes a second ring gear 250 and a second driving motor 260. In order to install the water supply pipe 110 and water outlet arm 180, it is checked whether the water supply pipe 110 interferes with the first drive motor 220 and second drive motor 260.

Since the water supply pipe 110 rotates around the connection socket 310, which functions as a connector for connecting pipes, it is important to set the fixed position of the connection socket 310. The installation location of the connection socket 310 must be optimized, and the fixing positions and sizes of the first drive motor 220 and second drive motor 260 will be determined depending on the location where the connection socket 310 is installed. The connection socket 310 and first connection pipe 152 according to an embodiment of the present invention are located in the lateral direction of the second drive motor 260.

In addition, it is necessary to set the length and ratio of the first supply pipe 120 and second supply pipe 130. When the first supply pipe 120 and second supply pipe 130 move due to the movement of the water outlet arm 180, if the lengths of the first supply pipe 120 and second supply pipe 130 is short, the possibility of interference with other parts is reduced. However, if the overall length of the water supply pipe 110 is not sufficient, the spiral movement of the first water outlet nozzle 135 cannot be properly achieved.

Therefore, the lengths of the first supply pipe 120 and second supply pipe 130 are designed within the technical ideal in which the spiral movement of the first water outlet nozzle 135 is sufficiently performed, and the area of the water supply pipe 110 extending to the outside of the movable housing part 280 is minimized.

In the water supply pipe 110 according to an embodiment of the present invention, the first supply pipe 120 is coupled to the second supply pipe 130, so the first inner pipe 121 and second inner pipe 131 are connected. In addition, the portion where the first outlet pipe 124 and second inlet pipe 132 are connected are rotatably connected, and an O-ring is in addition installed as necessary, thereby preventing water leakage.

The water supply pipe 110 can be made of aluminum, and various metal materials can be used within the technical idea of forming a rigid pipe. Such a water supply pipe 110 can be used to replace conventional silicon hoses, and can solve the problem of fatigue failure caused by high temperature accumulation of silicon hoses. In addition, since the water supply pipe 110 according to an embodiment of the present invention is made of a metal material, it can prevent hardening of the water supply pipe 110 and block the discharge of contaminants, including environmental hormones, compared to a method using a soft tube.

Meanwhile, the water supply pipe 110 according to the present invention is formed as one piece without a connection portion between the nozzle and the supply pipe. The first water outlet nozzle 135 and first body pipe 123 are integrally connected, and the joint portion of the first water outlet nozzle 135 and first body pipe 123 is fixed. In addition, since the nozzle that discharges water downward and pipe that supplies water to the nozzle are integrated into the first water outlet nozzle 135, the water leak phenomenon that occurs at the connection portion of the conventional nozzle is solved. In addition, maintenance costs can be reduced by blocking water leakage between the first water outlet nozzle 135 and the first body pipe 123.

Since the water supply pipe 110 having the above configuration is formed of a metal material, the transfer of the load of the water supply pipe 110 to the first water outlet nozzle 135 and water outlet arm 180 is minimized. Also, since the accumulation of fatigue load in the first water outlet nozzle 135 and water outlet arm 180 is reduced, the durability and operational reliability of the water outlet arm 180 and water supply pipe 110 can be improved.

Meanwhile, the present invention supplies water to the dripper 10 using the water supply pipe 110 in the shape of a steel pipe that is not bent. Thus, when the first water outlet pipe moves in a spiral shape, twisting of the water supply pipe 110 is prevented, so that water supply operation can be performed more easily.

### [Supply pipe]

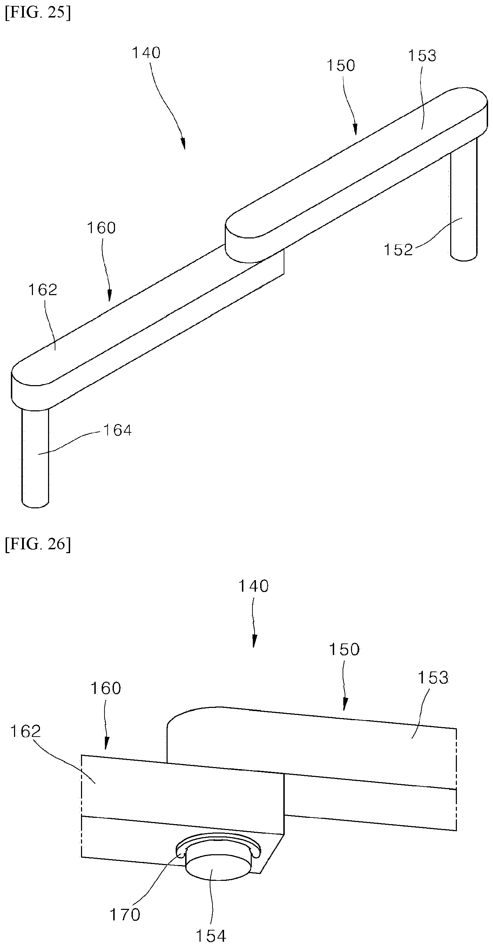

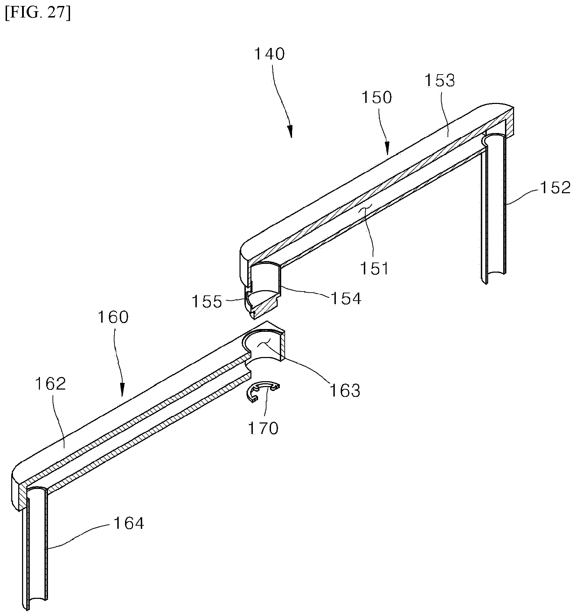

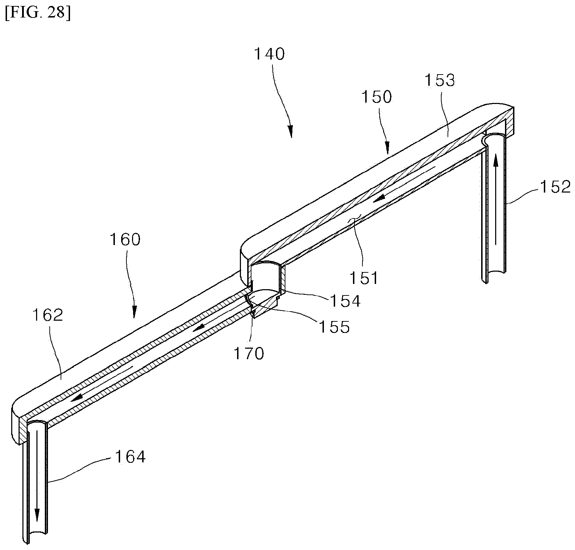

FIG. 25 is a perspective view illustrating the supply pipe 140 according to another embodiment of the present invention, FIG. 26 is a perspective view illustrating a state in which the first supply pipe 150 and second supply pipe 160 are connected according to another embodiment of the present invention, FIG. 27 is a partially cutaway perspective view illustrating a state in which the first supply pipe 150 and second supply pipe 160 are separated according to another embodiment of the present invention, and FIG. 28 is a partially cutaway perspective view illustrating an assembled state of the first supply pipe 150 and second supply pipe 160 according to another embodiment of the present invention.

As shown in FIGS. 25 to 28, the supply pipe 140 according to another embodiment of the present invention includes the first supply pipe 150 and the second supply pipe 160. In addition, the supply pipe 140 may further include a mounting ring 170 to rotatably connect the first supply pipe 150 and second supply pipe 160.

### [First supply pipe]

The first supply pipe 150 according to another embodiment of the present invention includes the first connection pipe 152, a first pipe body 153, and a first discharge pipe 154. A first inner pipe 151 is installed inside the first supply pipe 150 to guide the movement of water.

The first connection pipe 152 extends in the upward-downward direction and is a pipe that guides water that has passed through the water pump 300 upward. The connection socket 310 may be additionally installed between the first connection pipe 152 and the water pump 300. The first connection pipe 152 can rotate around the connection socket 310 while connected to the connection socket 310.

The first pipe body 153 is connected to the first connection pipe 152 and extends in the lateral direction of the first connection pipe 152, so that the movement of water moved upward by the first connection pipe 152 is guided in the horizontal direction.

The first discharge pipe 154 extends downward from the first pipe body 153 and is coupled to the second supply pipe 160. The first discharge pipe 154 guides the water that has passed through the first pipe body 153 to the inside of the second supply pipe 160 through the discharge hole 155 provided on the side of the first discharge pipe 154 to the inside of the second supply pipe 160.

The first discharge pipe 154 is a circular pipe that extends in the upward-downward direction, and the discharge hole 155 for discharging water in the lateral direction is provided on the side surface of the first discharge pipe 154. The length in the upward-downward direction of the first discharge pipe 154 is formed to be longer than the thickness in the upward-downward direction of the second pipe body 162 of the second supply pipe 160, which will be described later. Accordingly, the lower end of the first discharge pipe 154 penetrates the second supply pipe 160 and protrudes downward from the second supply pipe 160.

The mounting ring 170 is mounted on the outside of the first discharge pipe 154 protruding downward from the second supply pipe 160 and hangs on the lower side of the second supply pipe 160. The mounting ring 170 according to another embodiment of the present invention is an E-shaped ring, and if necessary, various types of fastening members in addition to the E ring can be used as the mounting ring 170.

### [Second supply pipe]

The second supply pipe 160 connected to the first supply pipe 150 includes a second pipe body 162 and a second water outlet nozzle 164. A second inner pipe 161 is installed inside the second supply pipe 160 to guide the movement of water.

The second pipe body 162 is provided with a hole-shaped mounting hole part 163 to be connected to the first discharge pipe 154 and extends in the horizontal direction. The second pipe body 162 guides the water discharged through the discharge hole 155 in the lateral direction. The second pipe body 162 has upper and lower sides that are flat and forms a pipe extending in the horizontal direction. A mounting hole 163 forming a hole in the in the upward-downward direction is formed on one side of the second pipe body 162, and a second water outlet nozzle 164 is connected to the other side of the second pipe body 162.

The second water outlet nozzle 164 extends to the lower side of the second pipe body 162 and is rotatably connected to the water outlet arm 180. The second water outlet nozzle 164 has a pipe shape extending in the in the upward-downward direction, the upper side of the second water outlet nozzle 164 is fixed to the second pipe body 162, and the lower side of the second water outlet nozzle 164 is rotatably installed at the water outlet arm 180. Meanwhile, the second pipe body 162 may rotate around the first discharge pipe 154.

The second water outlet nozzle 164 and second pipe body 162 are integrally connected, or the joint portion of the second water outlet nozzle 164 and second pipe body 162 is fixed, so the maintenance costs can be reduced by blocking water leakage between the second water outlet nozzle 164 and the second pipe body 162.

Meanwhile, a rubber ring may be additionally installed at the connection portion between the first discharge pipe 154 and the second pipe body 162 to prevent water leakage.

The first pipe body 153 and second pipe body 162 are pipes in the shape of a rectangular parallelepiped, and the thickness in the upward-downward direction is thinner than that of a circular pipe, so the outer shape of the product can be designed compactly.

### [Water outlet arm]

As shown in FIGS. 5, 7, and 12, the water outlet arm 180 is rotatably installed on the first ring gear 200, and the water supply pipe 110 is rotatable connected to one side of the water outlet arm 180. Since the first water outlet nozzle 135 provided in the second supply pipe 130 is rotatably connected to the water outlet arm 180, as the water outlet arm 180 moves, the first water outlet nozzle 135 also moves along the water outlet arm 180, and the water discharge can be uniformly distributed over the set area.

The water outlet arm 180 according to an embodiment of the present invention includes a mounting body 181, a first arm 182, and a second arm 183.

The mounting body 181 is rotatably coupled to the first ring gear 200 provided in the first moving part 190. The first ring gear 200 includes a rotational support protrusion 210 that protrudes upward, and the mounting body 181 is installed in a shape that surrounds the upper end of the rotational support protrusion 210.

The first arm 182 extends from the mounting body 181 and is connected to the second supply pipe 130. The first arm 182 extends a predetermined length from the mounting body 181, and has a ring-shaped hook at an end for rotatably connecting the second supply pipe 130.

The second arm 183 extends from the mounting body 181 and has a protruding gear 184 engaged with a gear provided on the second moving part 240. The second arm 183 extends a predetermined length from the mounting body 181, and a protruding gear 184 for engaging the inner gear 254 of the second moving part 240 is provided on the outer peripheral surface of the second arm 183.

The water outlet arm 180 faces the inlet of the dripper 10 and is located on the upper side of the dripper 10, and is capable of rotating around the rotational support protrusion 210. The first arm 182 is located on the upper side of the dripper 10, and the first water outlet nozzle 135 coupled to the first arm 182 is also located on the upper side of the dripper 10.

In addition, since the rotational support protrusion 210 rotates in the circumferential direction together with the first ring gear 200, the water outlet arm 180 can also revolve together with the rotational support protrusion 210.

The second arm 183 is formed in a fan shape, and a gear is formed in an arc shape on the outer peripheral surface of the second arm 183. The protruding gear 184 formed on the outer peripheral surface of the second arm 183 engages with the inner gear 254 provided in the second ring gear 250, and rotates according to relative positions of the first ring gear 200 and second ring gear 250.

The first water outlet nozzle 135 is disposed in the vertical direction and is rotatably inserted into a ring provided at the end of the first arm 182. The first water outlet nozzle 135 can perform various motions such as rotation and revolution together with the first arm 182.

### [First moving part]

The first moving part 190 rotatably supports the water outlet arm 180, and various modifications are possible within the technical idea of moving the water outlet arm 180 in the circumferential direction. The first moving part 190 according to an embodiment of the present invention includes the first ring gear 200, the rotational support protrusion 210, the second drive motor 260, and the first connection gear 230.

The first ring gear 200 extends in a ring shape, and a first external gear 202 is provided along the outer circumference. The rotational support protrusion 210 has a protrusion shape that protrudes upward from the body of the first ring gear 200 and rotatably supports the water outlet arm 180.

The first external gear 202 is made of teeth arranged along the outer periphery of the first ring gear 200, and may be formed over the entire outer periphery of the first ring gear 200.

The rotational support protrusion 210 is installed in the vertical direction and can be inserted into the mounting body 181 of the water outlet arm 180. Therefore, the water outlet arm 180 can stably rotate around the water outlet body connected to the rotational support protrusion 210.

The first drive motor 220 can be modified in various ways within the technical idea of supplying power to rotate the first ring gear 200. The first drive motor 220 according to an embodiment of the present invention uses an electric motor, and a servo motor or a motor equipped with an encoder may also be used.

The first connection gear 230 transmits the power of the first drive motor 220 to the first ring gear 200, and if necessary, multiple gears can be engaged to transmit power.

### [Second moving part]

The second moving part 240 is gear-connected to the water outlet arm 180 and is configured to rotate the water outlet arm 180 around the rotational support protrusion 210 together with the first water outlet nozzle 135. The second moving part 240 causes the water outlet arm 180 to rotate around the rotational support protrusion 210 while the water outlet arm 180 rotates together with the first ring gear 200. The first ring gear 200 and second ring gear 250 may be configured to rotate the water outlet arm 180 around the rotational support protrusion 210 while rotating in the same direction.

The second moving part 240 is installed in succession to the first moving part 190 and has a gear engaged with the water outlet arm 180. In addition, the second moving part 240 rotates in the same direction as the first moving part 190, and various modifications are possible within the technical idea of rotating the water outlet arm 180 due to a speed difference from the first moving part 190.

The second moving part 240 according to an embodiment of the present invention includes the second ring gear 250, the second drive motor 260, and the second connection gear 270.

The second ring gear 250 extends in a ring shape on the upper side of the first ring gear 200, and a second external gear 252 is provided along the outer circumference. Also, an inner gear 254 that engages with the water outlet arm 180 is provided on the inside of the second ring gear 250.

The inner gear 254 is made of teeth arranged along the inner periphery of the second ring gear 250, and may be formed over a portion of the inner periphery of the second ring gear 250. The protruding gear 184 provided on the water outlet arm 180 is engaged with the inner gear 254.

The second external gear 252 is made of teeth arranged along the outer periphery of the second ring gear 250, and may be formed over the entire outer periphery of the second ring gear 250.

The second drive motor 260 can be modified in various ways within the technical idea of supplying power to rotate the second ring gear 250.

The second connection gear 270 transmits the power of the second drive motor 260 to the second ring gear 250, and if necessary, multiple gears can be engaged to transmit power.

### [Movable housing part]

The movable housing part 280 supports the first movable part 190 and second movable part 240, and various modifications are possible within the technical idea of being fixed to the case part 400. The movable housing part 280 according to an embodiment of the present invention includes a lower housing 282 and an upper housing 284.

The lower housing 282 is installed in a shape that surrounds the lower side of the second moving part 240 and is fixed to the case part 400. The first ring gear 200 and second ring gear 250 are rotatably installed on the upper side of the lower housing 282.

The upper housing 284 is located above the lower housing 282 and is installed in a shape that surrounds the upper side of the first moving part 190. The upper housing 284 is fixed to the upper side of the lower housing 282, and the first ring gear 200 and second ring gear 250 are rotatable installed between the upper housing 284 and the lower housing 282.

### [Position measurement part]

The position measurement part 290 may be variously modified within the technical idea of measuring the position of the first ring gear 200 and the position of the second ring gear 250 and transmitting the measured values to the control part 900. The position measurement part 290 according to an embodiment of the present invention includes a first measurement part 291 and a second measurement part 295.

The first measurement part 291 measures the position of the first ring gear 200 and transmits the measured value to the control part 900. The first measurement part 291 according to an embodiment of the present invention includes a first measurement sensor 292 mounted on the movable housing part 280, and a first magnet 293 mounted on the first ring gear 200.

The first magnet 293 is mounted on the outside of the first ring gear 200, and the first measurement sensor 292 is fixed on the outside of the movable housing part 280. The first measuring part 291 is a Hall sensor and detects the position of the first magnet 293 rotating together with the first ring gear 200.

The second measurement part 295 measures the position of the second ring gear 250 and transmits the measured value to the control part 900. The second measuring part 295 according to an embodiment of the present invention includes a second measuring sensor 296 mounted on the movable housing part 280, and a second magnet 297 mounted on the second ring gear 250.

The second magnet 297 is mounted on the outside of the second ring gear 250, and the second measurement sensor 296 is fixed on the outside of the movable housing part 280. The second measuring part 295 is a Hall sensor and detects the position of the second magnet 297 rotating together with the second ring gear 250.

### [Water pump]

The water pump 300 operates with supply of electricity and supplies the water delivered through the water tank 700 to the water supply pipe 110. The water supply pipe 110 may be directly connected to the water pump 300, and the connection socket 310 may be additionally installed between the water supply pipe 110 and the water pump 300.

### [Connection socket]

The connection socket 310 has one side to which a pipe connected to the water pump 300 is connected, and the other side connected to the water supply pipe 110. The connection socket 310 is a connector used to connect two pipes, and connects the water supply pipe 110 and pipe connected to the water pump 300 in the present invention.

In addition, since the first inlet pipe 122 of the water supply pipe 110 is rotatably connected to the connection socket 310, the first body pipe 123 and first inlet pipe 122 are installed to be rotatable about the connection socket 310.

### [Operations]

The overall operation of the coffee maker 1 will be described with reference to FIGS. 3 and 5. After coffee beans are put into the hopper 550 of the grinder 500 and the grinding motor 510 is operated, the power of the grinding motor 510 is transmitted to the rotator 530 through the transmission gear 520 and rotates the rotator 530.

As the rotator 530 rotates, the grinding gear 540 rotates and makes the coffee beans into coffee powder. The coffee powder that falls from the grinder 500 passes through the inside of the water outlet module 100 and accumulates inside the container 12 of the dripper 10.

Then, the water stored inside the water tank 700 is heated by the heating part 800, and the heated water moves to the water supply pipe 110 through the water pump 300. The water moved inside the first supply pipe 120 moves to the second supply pipe 130 and falls inside the dripper 10 through the second water outlet nozzle 164.

The operation of the second supply pipe 130, which includes the water outlet arm 180 and the second water outlet nozzle 164, moving along a spiral shape will be described with reference to the drawings.

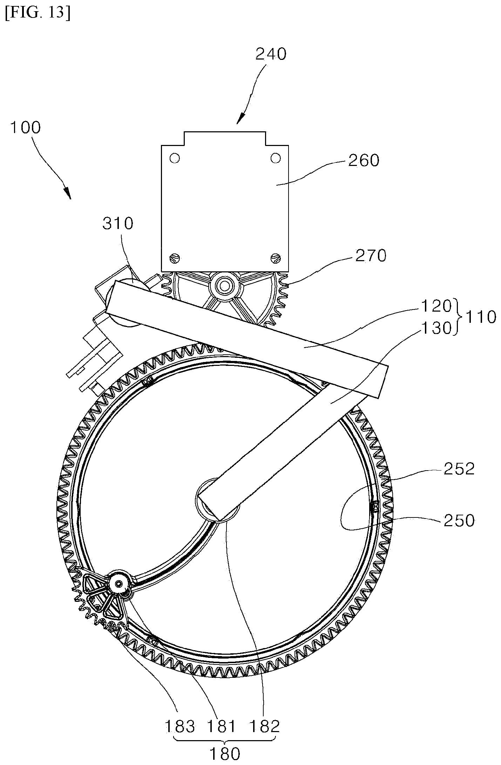

FIGS. 13 to 24 are plan views illustrating a state in which the water supply pipe 110 is moved together with the water outlet arm 180 according to an embodiment of the present invention.

As shown in FIG. 13, the first supply pipe 120 is rotatably connected to the connection socket 310, and the second supply pipe 130 is rotatably connected to the first supply pipe 120, and the second supply pipe 130 is rotatably connected to the first arm 182.

Then, the position of the water outlet arm 180 shown in FIG. 13 is set to a default position, and the second arm 183 provided on the water outlet arm 180 is in a state of engaging with the inner gear 254 provided on the second ring gear 250.

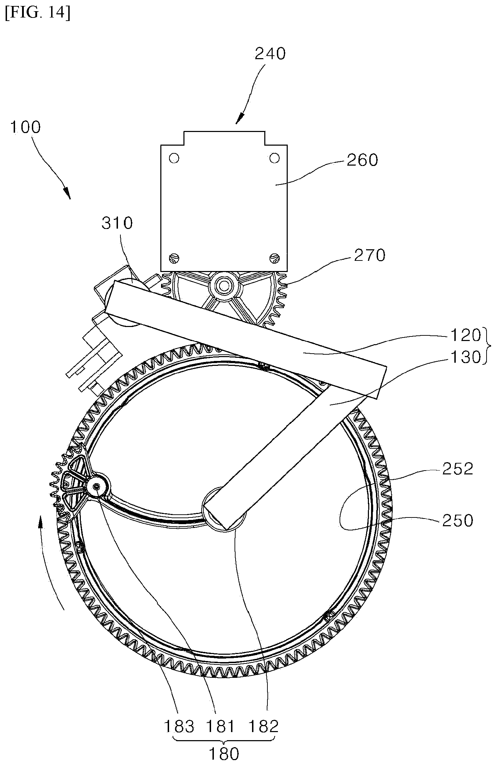

As shown in FIG. 14, while the first ring gear 200 and second ring gear 250 rotate clockwise, the second ring gear 250 on the upper side rotates clockwise more than the first ring gear 200 by a set angle. For example, when the first ring gear 200 rotates by 45°, the second ring gear 250 rotates by 46°. Since a phase difference of 1° occurs between the first ring gear 200 and the second ring gear 250, the water outlet arm 180 rotates clockwise while revolving.

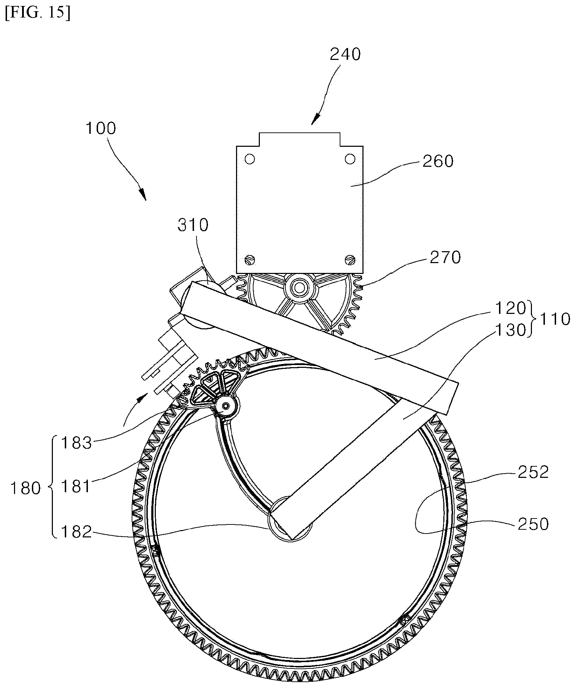

As shown in FIG. 15, while the first ring gear 200 and second ring gear 250 continue to rotate clockwise, the water outlet arm 180 continues to rotate and revolve. For example, when the first ring gear 200 rotates by 90°, the second ring gear 250 rotates by 92°. Since a phase difference of 2° occurs between the first ring gear 200 and the second ring gear 250, the water outlet arm 180 rotates clockwise while revolving. The first arm 182 moves toward the inside of the second ring gear 250 in a spiral shape from the center of the second ring gear 250.

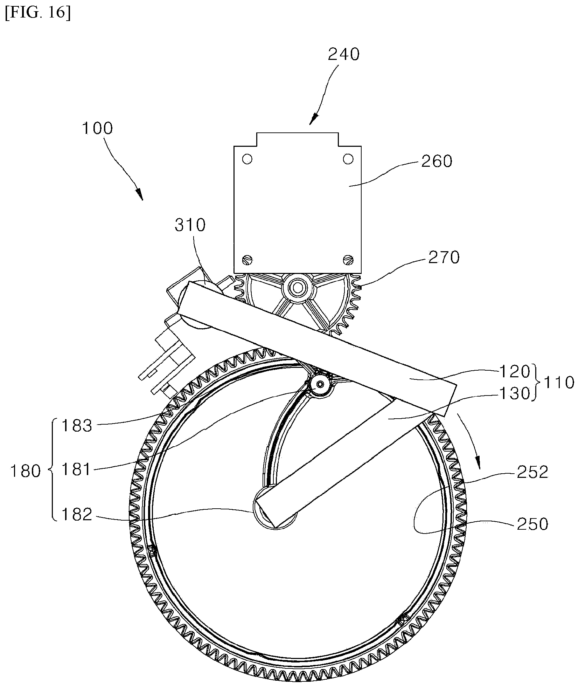

As shown in FIG. 16, while the first ring gear 200 and second ring gear 250 continue to rotate clockwise, the water outlet arm 180 continues to rotate and rotate. For example, when the first ring gear 200 rotates by 135°, the second ring gear 250 rotates by 138°. Since a phase difference of 3° occurs between the first ring gear 200 and the second ring gear 250, the water outlet arm 180 rotates clockwise while revolving. The first arm 182 continues to move inside the second ring gear 250 in a spiral shape from the center of the second ring gear 250.

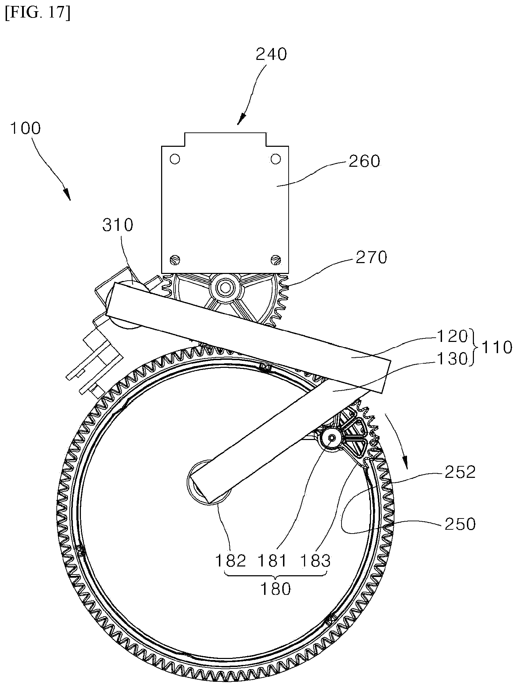

In FIG. 17, when the first ring gear 200 rotates by 180° from the default position, the second ring gear 250 rotates by 184° from the default position. Since a phase difference of 4° occurs between the first ring gear 200 and the second ring gear 250, the water outlet arm 180 rotates clockwise while revolving.

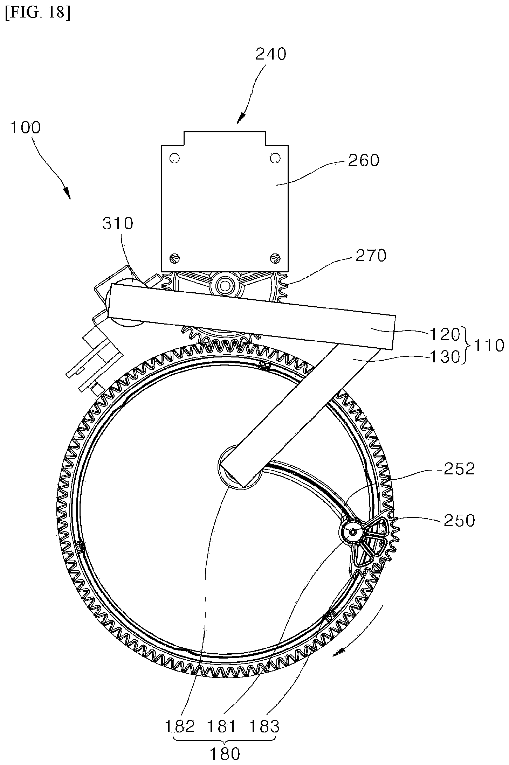

In FIG. 18, when the first ring gear 200 rotates by 225° from the default position, the second ring gear 250 rotates by 230° from the default position. Since a phase difference of 5° occurs between the first ring gear 200 and the second ring gear 250, the water outlet arm 180 rotates clockwise while revolving.

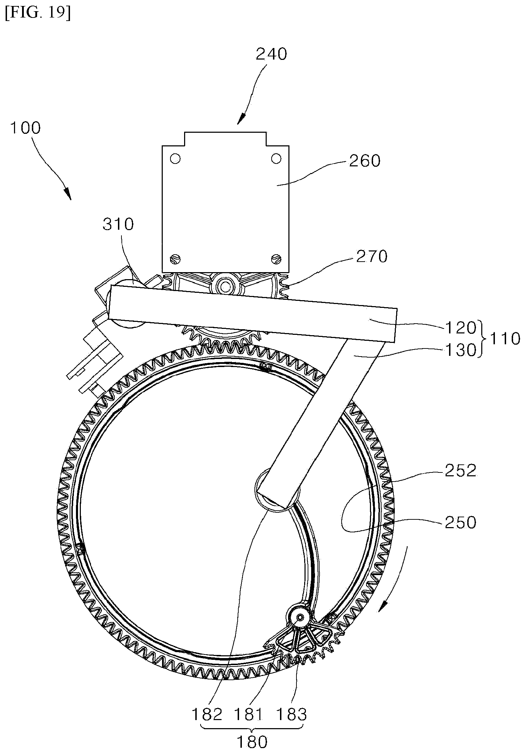

In FIG. 19, when the first ring gear 200 rotates by 270° from the default position, the second ring gear 250 rotates by 276° from the default position. Since a phase difference of 6° occurs between the first ring gear 200 and the second ring gear 250, the water outlet arm 180 rotates clockwise while revolving.

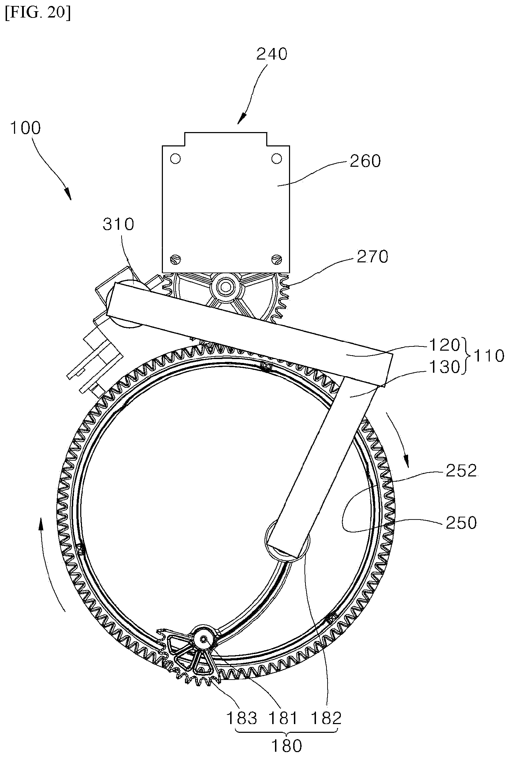

In FIG. 20, when the first ring gear 200 rotates by 315° from the default position, the second ring gear 250 rotates by 322° from the default position. Since a phase difference of 7° occurs between the first ring gear 200 and the second ring gear 250, the water outlet arm 180 rotates clockwise while revolving.

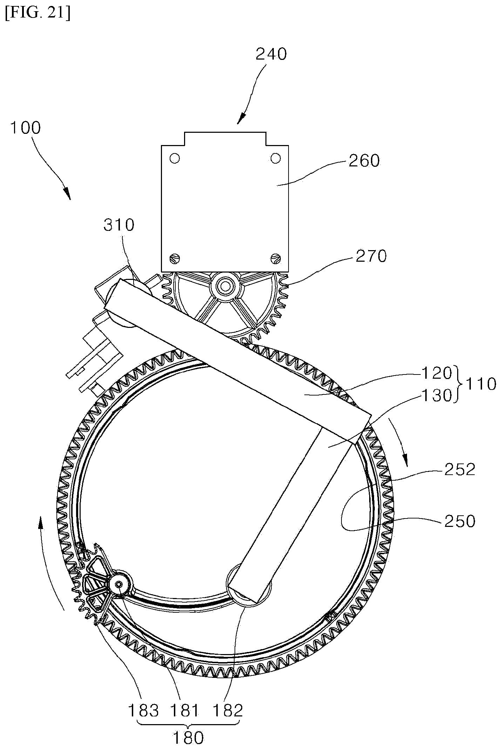

In FIG. 21, when the first ring gear 200 rotates by 360° from the default position, the second ring gear 250 rotates by 368° from the default position. Since a phase difference of 8° occurs between the first ring gear 200 and the second ring gear 250, the water outlet arm 180 rotates clockwise while revolving.

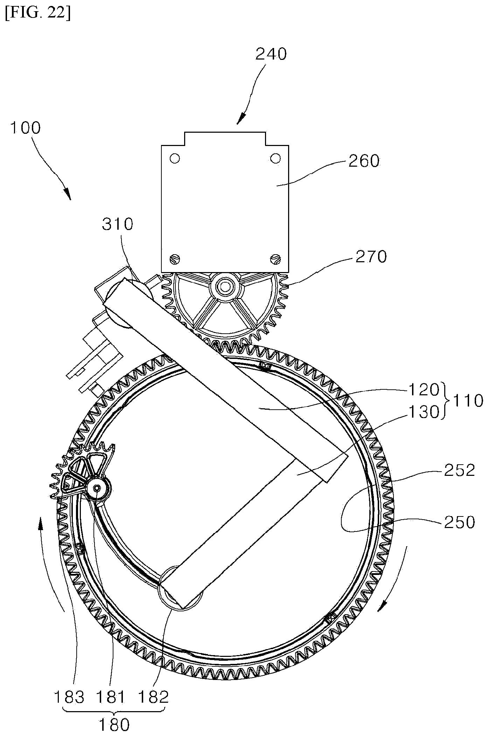

In FIG. 22, when the first ring gear 200 rotates by 405° from the default position, the second ring gear 250 rotates by 414° from the default position. Since a phase difference of 9° occurs between the first ring gear 200 and the second ring gear 250, the water outlet arm 180 rotates clockwise while revolving.

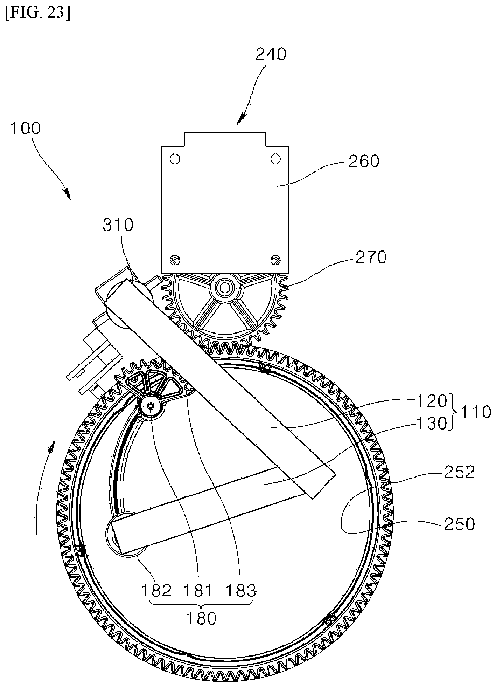

In FIG. 23, when the first ring gear 200 rotates by 450° from the default position, the second ring gear 250 rotates by 460° from the default position. Since a phase difference of 9° occurs between the first ring gear 200 and the second ring gear 250, the water outlet arm 180 rotates clockwise while revolving.

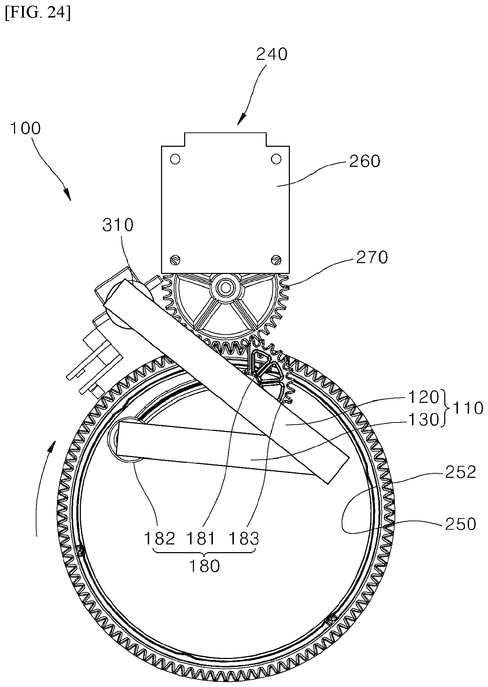

In FIG. 24, when the first ring gear 200 rotates by 495° from the default position, the second ring gear 250 rotates by 506° from the default position. Since a phase difference of 11° occurs between the first ring gear 200 and the second ring gear 250, the water outlet arm 180 rotates clockwise while revolving.

As shown in FIGS. 13 to 24, the end of the first arm 182 of the water outlet arm 180 draws a spiral circle from the center of the second ring gear 250 and gradually moves in a direction away from the center of the second ring gear 250. Therefore, water falling from the first water outlet nozzle 135 connected to the first arm 182 can be uniformly supplied to the coffee powder contained in the dripper 10.

In addition, as shown in FIGS. 5 and 7, each connection portion of the first supply pipe 120 and second supply pipe 130 is rotatably installed, so that there is no interference with the movement of the first supply pipe 120 and second supply pipe 130 together with the water outlet arm 180, and extraction of coffee liquid can be easily performed.

As described above, the present invention has been described with reference to the illustrative drawings, but the present invention is not limited to the embodiments and drawings disclosed herein, and various modifications may be made by those skilled in the art within the scope of the technical idea of the present invention. In addition, although the operational effects according to the configuration of the present invention were not explicitly described and explained while explaining the embodiments of the present invention, it is apparent that the predictable effects due to the configuration should also be recognized.

## Claims

1. A coffee maker, comprising:
a dripper, which receives water and ground coffee via an open upper side thereof, and extracts coffee from the ground coffee and discharges the coffee downward; and
a water outlet module which is located above the dripper and supplies the water to an inside of the dripper,
wherein the water outlet module comprises:
a supply pipe in which a plurality of pipes are rotatably connected;
a water outlet arm that moves with the supply pipe and controls a position of the water falling from the supply pipe;
a first moving part that rotatably supports the water outlet arm and rotates the water outlet arm along an inlet circumference of the dripper; and
a second moving part that is successively installed on the first moving part, includes a gear engaged with the water outlet arm, rotates in the same direction as the first moving part, and rotates the water outlet arm by a speed difference from the first moving part,
wherein the water is supplied through an inside of the supply pipe,
the supply pipe is rotatably connected to the water outlet arm.

2. The coffee maker of claim 1, wherein the supply pipe is made of a rigid type that does not deform in shape at room temperature.

3. The coffee maker of claim 2, wherein the supply pipe comprises:
a first supply pipe that is made of metal and includes a first inner pipe that guides movement of the water; and
a second supply pipe that includes one side rotatably connected to the first supply pipe, and the other side rotatably connected to the water outlet arm, and includes a second inner pipe that communicates with the first inner pipe and guides the movement of the water.

4. The coffee maker of claim 3, wherein the first supply pipe is located above the second supply pipe, and the water moved through the first inner pipe falls into the second inner pipe and then moves in a horizontal direction to be discharged.

5. The method of claim 3, wherein the first supply pipe comprises:
a first inlet pipe that extends in an upward-downward direction and guides the water that has passed through a water pump upward;
a first body pipe that is connected to the first inlet pipe, and extends in a lateral direction; and
a first outlet pipe that extends downward from the first body pipe and is coupled to the second supply pipe, and guides the water that has passed through the first body pipe to an inside of the second supply pipe.

6. The coffee maker of claim 5, further comprising a connection socket connected to a pipe connected to the water pump,
wherein the first inlet pipe is connected to the connection socket, and the first body pipe and the first inlet pipe are installed to be rotatable about the connection socket.

7. The coffee maker of claim 5, wherein the second supply pipe comprises:
a second inlet pipe that is located on the same axis as the first outlet pipe and is rotatably connected to the first outlet pipe;
a second body pipe that is connected to the second inlet pipe and extends in the lateral direction; and
a first water outlet nozzle that extends downward from the first body pipe and is rotatably connected to the water outlet arm.

8. The coffee maker of claim 7, wherein a male thread is formed on an outside of the
first outlet pipe, and a female thread is formed on an inside of the second inlet pipe, the first outlet pipe is coupled to an inside of the second inlet pipe.

9. The coffee maker of claim 8, wherein if a length in the upward-downward direction of the first outlet pipe is referred to as a first length, and a length in the upward-downward direction of the second inlet pipe is referred to as a second length, the first length is formed to be longer than the second length.

10. The coffee maker of claim 3, wherein the first supply pipe comprises:
a first connection pipe that extends in the upward-downward direction and guides the water that has passed through a water pump upward;
a first pipe body that is connected to the first connection pipe and extends in a lateral direction; and
a first discharge pipe that extends downward from the first pipe body and is coupled to the second supply pipe, and guides the water that has passed through the first pipe body to an inside of the second supply pipe through a discharge hole provided on a side surface.

11. The coffee maker of claim 10, wherein a lower end of the first discharge pipe penetrates the second supply pipe and protrudes downward from the second supply pipe,
the supply pipe further includes a mounting ring that is mounted on an outside of the first discharge pipe protruding below the second supply pipe and hangs on a lower side of the second supply pipe.

12. The coffee maker of claim 10, wherein the second supply pipe comprises:
a second pipe body that includes a hole-shaped mounting hole part for connection to the first discharge pipe, and guides the water discharged through the discharge hole to the lateral direction; and
a second water outlet nozzle that extends to a lower side of the second pipe body and is rotatably connected to the water outlet arm.

13. The coffee maker of claim 3, wherein the water outlet comprises:
a mounting body that is rotatably coupled to the first moving part;
a first arm that extends from the mounting body and is connected to the second supply pipe; and
a second arm that extends from the mounting body and engages a gear provided in the second moving part.

14. The coffee maker of claim 3, wherein the first moving part comprises:
a first ring gear that extends in a ring shape, and includes a first external gear provided along an outer circumference;
a rotational support protrusion that protrudes from the first ring gear and rotatably supports the water outlet arm;
a first drive motor that supplies power to rotate the first ring gear; and
a first connection gear that transmits the power of the first drive motor to the first ring gear.

15. The coffee maker of claim 14, wherein the second moving part comprises:
a second ring gear that extends in a ring shape above the first ring gear, and includes a second external gear provided along an outer circumference, and an inner gear that engages with the water outlet arm inside the second ring gear;
a second drive motor that supplies power to rotate the second ring gear; and
a second connection gear that transmits the power of the second drive motor to the second ring gear.
